(19) **Europäisches Patentamt**
**European Patent Office**
**Office européen des brevets**

(11) **EP 4 012 445 B1**

(12) **FASCICULE DE BREVET EUROPÉEN**

(45) Date de publication et mention
de la délivrance du brevet:
**13.08.2025 Bulletin 2025/33**

(21) Numéro de dépôt: **21210295.8**

(22) Date de dépôt: **24.11.2021**

(51) Classification Internationale des Brevets (IPC):
**G01S 13/42** (2006.01)   **G01S 13/90** (2006.01)
**G01S 7/41** (2006.01)   **G01S 13/88** (2006.01)
**F41G 7/22** (2006.01)

(52) Classification Coopérative des Brevets (CPC):
**G01S 7/417; F41G 7/2246; F41G 7/2286;**
**G01S 13/42; G01S 13/883; G01S 13/9043;**
**G01S 13/9092**

(54) **PROCÉDÉ ET DISPOSITIF POUR GÉNÉRER UN NUAGE 3D OPTIMISÉ DE POINTS D'UN OBJET LONGIFORME À PARTIR D'IMAGES GÉNÉRÉES PAR UN RADAR À SYNTHÈSE D'OUVERTURE MULTIVOIES**

VERFAHREN UND VORRICHTUNG ZUR ERZEUGUNG EINER OPTIMIERTEN 3D-PUNKTWOLKE EINES LÄNGLICHEN OBJEKTS AUS BILDERN, DIE VON EINEM MEHRKANAL-RADAR MIT SYNTHETISCHER APERTUR ERZEUGT WERDEN

METHOD AND DEVICE FOR GENERATING AN OPTIMISED 3D CLOUD OF POINTS OF AN ELONGATED OBJECT FROM IMAGES GENERATED BY A MULTI-CHANNEL SYNTHETIC APERTURE RADAR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.12.2020 FR 2012824**

(43) Date de publication de la demande:
**15.06.2022 Bulletin 2022/24**

(73) Titulaire: **MBDA France**
**92350 Le Plessis-Robinson (FR)**

(72) Inventeur: **LACROIX, César**
**92350 Le Plessis-Robinson (FR)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
**US-A- 4 546 355**

- **SALVETTI FEDERICA ET AL: "Multiview Three-Dimensional Interferometric Inverse Synthetic Aperture Radar", IEEE TRANSACTIONS ON AEROSPACE AND ELECTRONIC SYSTEMS, IEEE SERVICE CENTER, PISCATAWAY, NJ, US, vol. 55, no. 2, 1 April 2019 (2019-04-01), pages 718 - 733, XP011719015, ISSN: 0018-9251, [retrieved on 20190411], DOI: 10.1109/ TAES.2018.2864469**
- **RAJ RAGHU G ET AL: "3D ISAR Imaging Algorithm Based on Amplitude Monopulse Processing at W Band", 2019 IEEE INTERNATIONAL SYMPOSIUM ON PHASED ARRAY SYSTEM & TECHNOLOGY (PAST), IEEE, 15 October 2019 (2019-10-15), pages 1 - 6, XP033732161, DOI: 10.1109/ PAST43306.2019.9020743**
- **CAI JINJIAN ET AL: "3D ISAR Imaging: The Alignment Problem", 2019 INTERNATIONAL RADAR CONFERENCE (RADAR), IEEE, 23 September 2019 (2019-09-23), pages 1 - 5, XP033764121, DOI: 10.1109/ RADAR41533.2019.171419**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- **GUIJIE DIAO ET AL: "Three-dimensional monopulse radar imaging simulation of ships on sea surfaces", PROCEEDINGS OF SPIE, vol. 8536, 21 November 2012 (2012-11-21), US, pages 85360V - 1, XP055826260, ISSN: 0277-786X, ISBN: 978-1-5106-4374-1, DOI: 10.1117/12.974380**

**Description**

## DOMAINE TECHNIQUE

La présente invention concerne un procédé et un dispositif pour générer un nuage 3D optimisé de points illustrant un objet longiforme, à partir d'une séquence d'images de l'environnement de l'objet longiforme générées par un radar à synthèse d'ouverture pourvu d'une pluralité de voies.

## ÉTAT DE LA TECHNIQUE

La présente invention a donc pour but de générer un nuage 3D optimisé de points illustrant un objet longiforme (c'est-à-dire un objet plus long que large), immobile ou mobile, par exemple un navire en mer. Ce nuage 3D optimisé peut ensuite être utilisé pour identifier exactement l'objet longiforme détecté. D'autres applications sont également possibles, comme précisé ci-dessous.

Bien que non exclusivement, la présente invention s'applique plus particulièrement au domaine militaire. Elle peut notamment être utilisée pour réaliser une reconnaissance et une identification robustes de navires, notamment de navires ennemis, à l'aide d'un radar dans le cadre d'une fonction de détection, de reconnaissance et d'identification.

Elle peut ainsi en particulier être montée sur un missile de longue portée pour réaliser une identification autonome en vol d'une cible à engager, par exemple une cible navale pour le guidage terminal.

Dans de telles applications, la reconnaissance et l'identification doivent pouvoir être réalisées sur un objet mobile et doivent pouvoir être en mesure de discriminer deux ou plusieurs objets proches l'un de l'autre, mobiles ou non.

De plus, la reconnaissance et l'identification doivent pouvoir être réalisées avec des signaux présentant un rapport signal sur bruit (rapport SNR ci-après, pour « Signal to Noise Ratio » en anglais) qui est faible, un temps d'intégration réduit et des risques de présence d'effets dits de « glint ».

Une reconnaissance et une identification qui satisfont ces conditions sont très difficiles à mettre en œuvre.

Par ailleurs, on connaît :

- par le document US 4 546 355, un système d'arme contrôlé par radar et, plus particulièrement, une méthode et un appareil pour générer une image SAR à haute résolution d'un bateau ;
- par un article de Salvetti Federica et AI, intitulé « Multiview Three-Dimensional Interferometric Inverse Synthetic Aperture Radar » et publié dans IEEE, le 1er avril 2019 aux pages 718 à 733, un radar SAR inverse à multiples vues et à trois dimensions ;

- par un article de Raj Raghu G et AI, intitulé « 3D ISAR Imaging Algorithm Based on Amplitude Monopulse Processing at W Band » et publié dans IEEE, le 15 octobre 2019 aux pages 1 à 6, un algorithme d'imagerie pour un radar SAR inverse à trois dimensions, basé sur un traitement monopulse d'amplitude dans la bande W ;
- par un article de Cai Jinjian et AI, intitulé « 3D ISAR Imaging : The Aligment Problem » et publié dans IEEE, le 23 septembre 2019 aux pages 1 à 5, la gestion d'un problème d'alignement dans un imageur SAR inverse à trois dimensions ; et
- par un article de Guijie Diao et AI, intitulé « Three-dimensional monopulse radar imaging simulation of ships on sea surfaces » et publié dans « Proceedings of spie », le 21 novembre 2012 aux pages 85360V-1, un radar monopulse à trois dimensions, imageant une simulation de bateaux sur la surface d'une mer.

## EXPOSÉ DE L'INVENTION

La présente invention a pour objet de proposer un procédé permettant de satisfaire les conditions précitées. Pour ce faire, elle concerne un procédé pour générer un nuage 3D optimisé de points illustrant un objet longiforme selon la revendication 1.

Selon l'invention, ledit procédé comporte au moins les étapes suivantes :

- une étape de seuillage consistant à réaliser un seuillage adaptatif de manière à générer un masque de segmentation pour chacune des images voie somme ;
- une étape de traitement consistant à réaliser, pour chacun desdits masques de segmentation, une accumulation de mesures de manière à générer pour chacun desdits masques de segmentation, au moins un accumulateur et un profil d'énergie ;
- une étape d'alignement consistant à recaler les accumulateurs et les profils d'énergie de manière à obtenir des accumulateurs dits recalés et des profils d'énergie dits recalés ;
- une étape de calcul consistant à calculer, pour chacun desdits masques de segmentation, à partir des accumulateurs recalés et des profils d'énergie recalés obtenus à l'étape d'alignement, un nuage unitaire via une fusion unitaire ; et
- une étape de fusion consistant à fusionner les nuages unitaires, de manière à obtenir ledit nuage 3D optimisé.

Ainsi, grâce à l'invention, ledit procédé réalise notamment la fusion de plusieurs nuages 3D unitaires pour lisser les instationnarités et réduire le bruit 3D, comme précisé ci-dessous.

Dans le cadre de la présente invention :

- une image SAR dite multivoie est composée d'une image SAR par voie. Par exemple, une image SAR multivoie avec N voies de réception est composée de N images SAR. Chaque image d'indice i (i allant de 1 à N) est générée avec la voie de réception d'indice correspondant ; et

- le traitement interférométrique transforme l'image multivoie et fournit une image dite voie somme et deux cartes angulaires de même taille définissant les angles d'azimut et d'élévation pour chaque pixel de l'image voie somme.

Dans un mode de réalisation préféré, l'étape de seuillage comprend :

- une sous-étape consistant à comparer le niveau de l'intensité de chaque pixel à au moins un seuil d'intensité minimale ; et
- une sous-étape consistant à retenir uniquement les pixels dont l'intensité est supérieure à ce seuil d'intensité minimale dans le masque de segmentation qui est une carte binaire de même taille que l'image voie somme dans laquelle les pixels retenus sont à 1 et les pixels non retenus sont à 0.

Avantageusement, à l'étape de seuillage, on réalise, de plus, une sous-étape consistant à réaliser un filtrage morphologique.

Selon l'invention, l'étape de traitement comprend la suite de sous-étapes successives suivantes, qui sont mises en œuvre pour chaque masque de segmentation :

- une sous-étape consistant à mettre en œuvre une analyse en composantes principales pour estimer un axe de longueur de l'objet longiforme, représentant un axe dit principal ;
- une sous-étape consistant à calculer au moins un accumulateur échantillonné selon l'axe principal, l'accumulateur représentant une grille à une dimension comportant une pluralité de cellules, chacune desdites cellules contenant les pixels du masque de segmentation qui sont situés au niveau de la cellule ; et
- une sous-étape consistant à calculer au moins un profil d'énergie à partir de l'accumulateur, le profil d'énergie représentant un vecteur à une dimension dont les valeurs dépendent des intensités des pixels de chacune des cellules de l'accumulateur.

Ainsi, grâce à cette étape de traitement, par laquelle on sacrifie l'axe transverse (contenant peu d'informations dans le cas d'un objet longiforme imagé) et on maximise l'information longitudinale (de l'objet longiforme imagé) selon ledit axe principal, l'effet de « glint » est réduit et le bruit additif est lissé. De plus, le profil d'énergie va permettre de recaler les accumulateurs issus de chaque masque de segmentation, comme précisé ci-après.

Selon l'invention, l'étape d'alignement fournit autant d'accumulateurs et de profils d'énergie que de masques de segmentation. Tous les accumulateurs et les profils d'énergie fournis présentent le même nombre de cellules et toutes les cellules d'index donné se correspondent. En outre, de façon avantageuse, l'étape d'alignement comprend la suite de sous-étapes successives suivantes, qui sont mises en œuvre pour chaque masque de segmentation :

- une sous-étape consistant à réaliser une corrélation du ou des profils pour estimer des translations potentielles et des échantillonnages optimaux ; et
- une sous-étape consistant à réaliser une complétion par des cellules vides et des composantes d'énergie nulles de profils antérieurs ou du profil suivant.

Cette étape d'alignement réalise la mise en correspondance des mesures de la séquence temporelle. Elle vise à recaler les profils d'énergie pour toutes les mesures de la séquence temporelle. Elle est fondamentale pour mettre en correspondance les accumulateurs et les profils d'énergie des instants de la séquence temporelle.

Selon l'invention, l'étape de calcul consiste, pour chacun des masques de segmentation, à définir un nuage unitaire dont le nombre de points est égal au nombre de cellules de l'accumulateur recalé, et comprend la suite de sous-étapes successives suivantes, qui sont mises en œuvre pour chaque cellule de l'accumulateur recalé :

- une sous-étape consistant à calculer un ensemble de composantes dites individuelles de chacun des pixels dans la cellule ;
- une sous-étape consistant à calculer un ensemble de composantes dites globales pour chacune des cellules, à partir de l'ensemble des composantes individuelles de la cellule ; et
- une sous-étape consistant à calculer une composante de niveau, en fonction au moins de la valeur du profil d'énergie à la cellule.

En outre, dans un mode de réalisation particulier, le calcul de la composante de niveau prend en compte, en plus de la valeur du profil d'énergie à la cellule, la somme quadratique des écarts-types calculés sur les pixels relocalisés en 3D, contenus dans la cellule.

Cette étape de calcul réalisant des fusions dite unitaires permet :

- de lisser le contenu radiométrique (profil d'énergie moyenné par construction) sur un voisinage de la signature, ce qui génère un lissage radiométrique spatial ; et
- de lisser le contenu géométrique (moyenne des positions 3D dans chaque cellule d'accumulateur) sur un voisinage de la signature, ce qui génère une réduction du bruit spatial 3D induit par le bruit angulaire de la mesure interférométrique (elle-même induite par le bruit thermique et l'effet de « glint »).

Selon l'invention, l'étape de fusion comprend :

- une sous-étape consistant, pour chaque nuage unitaire, à réaliser les opérations suivantes :

  • centrer les composantes globales du nuage unitaire ;
  • mettre en œuvre une analyse en composantes principales pour estimer l'axe longitudinal du nuage unitaire ; et
  • générer une rotation du nuage unitaire pour l'orienter selon un axe prédéfini ;

- une sous-étape consistant à calculer la moyenne statistique, point à point, des composantes globales et de la composante de niveau de l'ensemble des nuages unitaires pour obtenir ledit nuage 3D optimisé.

Cette étape de fusion permet :

- de lisser le contenu radiométrique sur un voisinage temporel de la signature. Ainsi, le contenu radiométrique est moins fluctuant selon l'angle d'aspect ; et
- de lisser le contenu géométrique sur un voisinage temporel de la signature. Ainsi, on obtient une réduction supplémentaire du bruit spatial 3D induit par le bruit angulaire de la mesure interférométrique (elle-même induite par le bruit thermique et l'effet de « glint »).

Avantageusement, l'étape de fusion comprend également une sous-étape de filtrage de points aberrants, dont le lissage n'est pas suffisant, ce qui permet d'optimiser le procédé.
La présente invention concerne également un dispositif pour générer un nuage 3D optimisé de points illustrant un objet longiforme selon la revendication 7.
Le dispositif et/ou le procédé, tels que décrits ci-dessus, peuvent être mis en œuvre dans de nombreuses applications, en particulier en étant intégrés dans différents systèmes d'utilisation et de traitement d'images radar, réelles ou simulées.
La présente invention concerne également un système de reconnaissance et d'identification d'une cible représentant un objet longiforme selon la revendication 8.
Avantageusement, ledit système comporte également une unité de décision utilisant les données transmises par l'unité de comparaison et des données supplémentaires pour prendre une décision.
La présente invention concerne, en outre, un système de génération d'une métrique entraînée et d'une base de référence relatives à au moins un type d'objet longiforme selon la revendication 10.

## BRÈVE DESCRIPTION DES FIGURES

D'autres avantages et caractéristiques ressortiront mieux de la description qui va suivre de plusieurs modes de réalisation de l'invention en se référant notamment aux figures annexées. Sur ces figures, des références identiques désignent des éléments semblables.

La figure 1 est le schéma synoptique d'un dispositif conforme à un mode de réalisation particulier de l'invention.
La figure 2 illustre une application particulière de l'invention.
Les figures 3A, 3B et 3C montrent schématiquement différents nuages 3D.
Les figures 4A, 4B et 4C montrent schématiquement différents accumulateurs.
La figure 5 est le schéma synoptique d'un procédé conforme à un mode de réalisation particulier de l'invention.
Les figures 6A et 6B montrent schématiquement un alignement de pixels dans l'image et la création d'un accumulateur.
Les figures 7A et 7B illustrent des profils d'énergie, respectivement avant et après un recalage.
Les figures 8A, 8B, 8C et 8D permettent de mettre en évidence une étape de calcul de nuages unitaires.
Les figures 9A, 9B, 9C, 9D, 9E et 9F permettent de mettre en évidence une étape de fusion de nuages unitaires pour obtenir un nuage 3D optimisé.
La figure 10 est le schéma synoptique d'un système de reconnaissance et d'identification d'une cible représentant un objet longiforme.
La figure 11 est le schéma synoptique d'un système de génération d'une métrique entraînée et d'une base de référence.

## DESCRIPTION DÉTAILLÉE

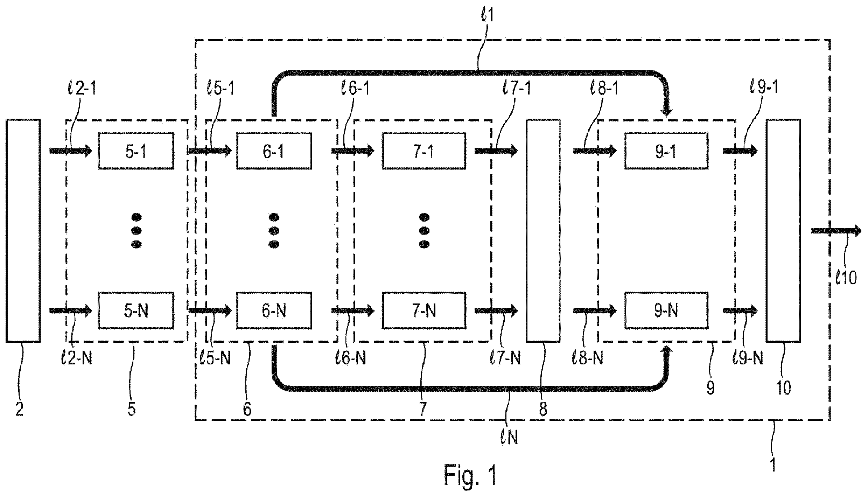

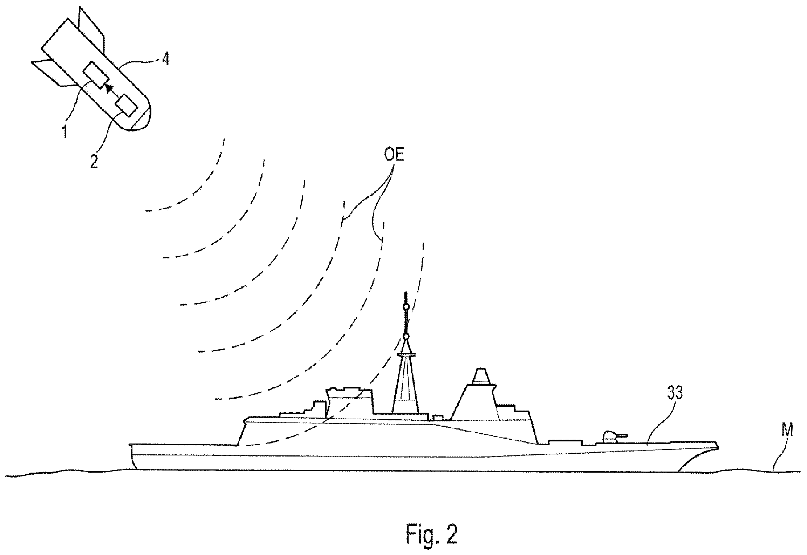

Le dispositif 1 représenté schématiquement sur la figure 1 et permettant d'illustrer l'invention, est destiné à générer un nuage 3D (à trois dimensions, c'est-à-dire dans l'espace) de points illustrant un objet longiforme 3 (ou allongé ou oblong) le long d'un axe longitudinal, c'est-à-dire un objet plus long que large.
Le dispositif 1 est destiné à générer le nuage 3D optimisé à partir d'une séquence d'images de l'environnement de l'objet longiforme, générées par un radar. Ce radar (ci-après « radar SAR 2 ») est un radar à synthèse d'ouverture (ou « SAR » pour « Synthetic Aperture Radar » en anglais), de type multivoies (c'est-à-dire pourvu d'une pluralité de voies). De préférence, le radar SAR 2 dispose d'une voie d'émission et de plusieurs voies de réception (pour mettre en œuvre une l'interférométrie radar). A titre d'illustration, on a représenté sur la figure 2 de façon très schématique des ondes électromagnétiques OE émises par la voie d'émission du radar SAR 2.

De façon générale, une image SAR générée par un radar SAR (et donc notamment une image générée par le radar SAR 2) présente les avantages suivants :

- elle rehausse le signal dans le bruit ;
- elle sépare les éventuels différents contributeurs.

Plus précisément, plus le temps d'intégration est augmenté, plus la résolution et le rapport signal à bruit (ou SNR en anglais) sont augmentés.

De plus, un radar SAR de type multivoies permet au travers d'un traitement interférométrique de relocaliser en 3D avec :

- une mesure de distance ; et
- deux cartes angulaires en élévation et en azimut (issues du traitement interférométrique).

L'information angulaire est au premier ordre insensible au mouvement de l'objet longiforme 3 et est bruitée proportionnellement au bruit thermique de l'image. Elle est également généralement sensible à la présence de plusieurs contributeurs dans le pixel (fluctuation de type effet dit de « glint »). Le dispositif 1 va notamment permettre de remédier aux deux inconvénients ci-dessus (incertitude angulaire liée à l'effet de « glint » et au bruit thermique).

Bien entendu, dans le cadre de la présente invention, le dispositif 1 peut être utilisé pour traiter des images d'autres types d'objets longiformes, mobiles ou immobiles, par exemple des engins militaires terrestres ou maritimes.

De plus, le radar SAR 2 peut être monté sur d'autres engins volants, par exemple sur un avion d'observation.

Dans l'exemple décrit ci-après, l'objet longiforme 3 est un navire 33 se déplaçant sur une mer M (ou une autre étendue d'eau). De plus, dans l'exemple particulier représenté sur la figure 2, le dispositif 1 et le radar 2 sont montés sur un missile 4 qui se dirige vers le navire 33, en l'occurrence un navire ennemi, pour le neutraliser.

Dans le cadre de la présente invention, chacune des images générées par le radar SAR 2 (de type multivoies) comprend une image SAR par voie.

Dans l'exemple de la figure 1, on considère que le radar SAR émet une séquence de N images, à savoir 1 à N, transmises respectivement via des liaisons l2-1 à l2-N.

Pour faciliter la compréhension du traitement mis en œuvre par les unités 5, 6, 7 et 9 précisées ci-dessous, on a représenté sur la figure 1 de façon séparée les opérations mises en œuvre par chacune des N images multivoies, en représentant N modules, à savoir 5-1 à 5-N, 6-1 à 6-N, 7-1 à 7-N, et 9-1 à 9-N, bien que dans chacune de ces unités, l'unité correspondante réalise le même traitement pour les N images.

Le dispositif 1 comporte les unités suivantes, comme représenté sur la figure 1 :

- une unité de seuillage 6 configurée pour réaliser un seuillage adaptatif de manière à générer un masque de segmentation pour chacune de N images voie somme, reçues via des liaisons l5-1 à l5-N.;
- une unité de traitement 7 configurée pour réaliser, pour chacun des masques de segmentation, reçus via des liaisons l6-1 à l6-N de l'unité de seuillage 6, une accumulation de mesures de manière à générer pour chacun de ces masques de segmentation, au moins un accumulateur et un profil d'énergie ;
- une unité d'alignement 8 configurée pour recaler les accumulateurs et les profils d'énergie (reçus via des liaisons l7-1 à l7-N de l'unité de traitement 7) de manière à obtenir des accumulateurs dits recalés et des profils d'énergie dits recalés ;
- une unité de calcul 9 configurée pour calculer, pour chacun des masques de segmentation, un nuage unitaire via une fusion unitaire, à partir des accumulateurs recalés et des profils d'énergie recalés générés par l'unité d'alignement 8 et reçus via des liaisons l8-1 à l8-N de l'unité d'alignement 8, ainsi que des cartes angulaires (en élévation et en azimut) seuillées et des index de distances (reçus via des liaisons l1 à lN de l'unité de seuillage 6) ; et
- une unité de fusion 10 configurée pour fusionner les nuages unitaires, reçus via des liaisons l9-1 à l9-N de l'unité de calcul 9, de manière à générer ledit nuage 3D optimisé. Ce nuage 3D optimisé peut être transmis via une liaison l10 à un dispositif ou système utilisateur (non représenté).

On prévoit également une unité 5 pour soumettre les images générées par le radar SAR 2 (reçues via les liaisons l21 à l2N) à un traitement interférométrique, avant leur transmission (via des liaisons l5-1 à l5-N) à l'unité de seuillage 6. Ce traitement interférométrique forme, pour chaque image multivoie, une image voie somme ainsi que deux cartes angulaires en azimut et en élévation associées.

Cette unité 5 peut par exemple faire partie d'un ensemble ou module comprenant également le radar SAR 2.

Les caractéristiques et les traitements réalisés par les différentes unités du dispositif 1 sont précisés ci-dessous lors de la description d'un procédé PR mis en œuvre par le dispositif 1.

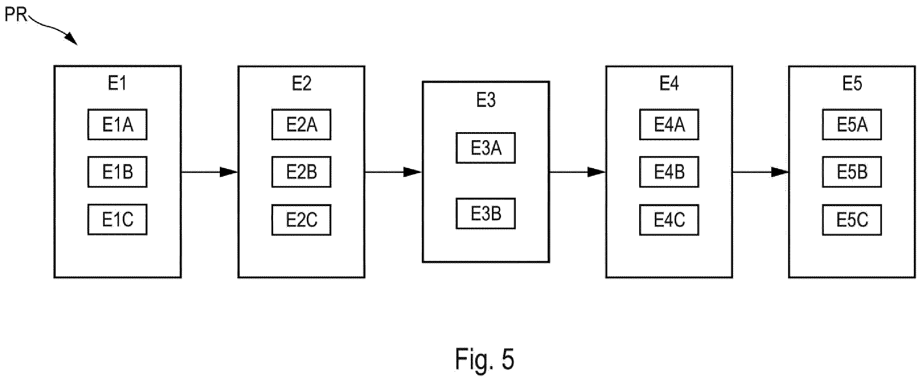

Le dispositif 1, tel que décrit ci-dessus, met en effet en œuvre le procédé PR représenté sur la figure 5, pour générer un nuage 3D optimisé de points illustrant un objet longiforme 3 (à savoir le navire 33 dans la description ci-après). Le procédé PR permet de former le nuage 3D optimisé à partir d'une séquence d'images SAR de l'environnement de l'objet longiforme 3 générées par le radar SAR 2 et traitées par l'interférométrie (unité 5), ces images comprenant des pixels relatifs à l'objet longiforme 3.

Comme précisé ci-dessous, le procédé PR via réaliser la fusion de plusieurs nuages 3D dits unitaires pour lisser les instationnarités et réduire le bruit 3D.

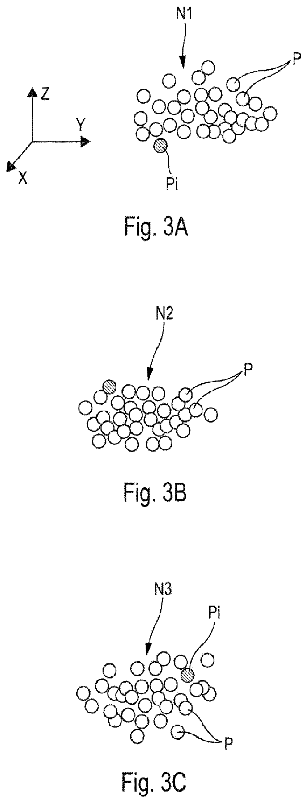

A titre d'illustration, on a représenté sur les figures 3A, 3B et 3D, dans un espace à trois dimensions (illustré par un référentiel d'axes X, Y et Z), respectivement trois nuages N1, N2 et N3 différents de points P.

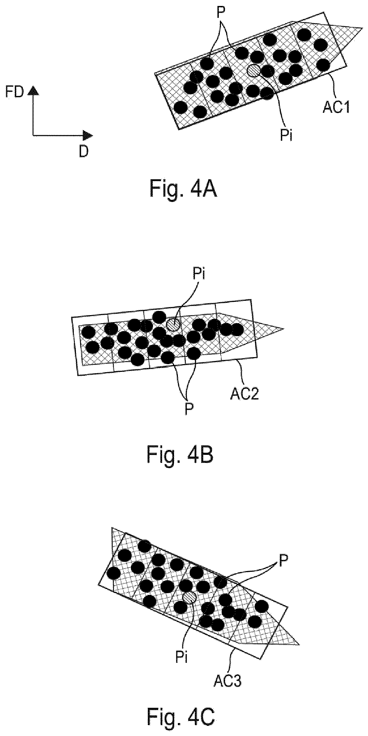

De façon générale, le procédé PR prévoit une mise en correspondance d'ensembles de pixels entre les images SAR, par exemple le point (ou pixel) Pi représenté sur les figures 4A, 4B et 4C, et une fusion des ensembles en 3D, comme indiqué ci-dessous. On ne pourra pas mettre en correspondance chaque point Pi mais des ensembles de pixels. Dans l'espace 3D, on ne gardera ainsi que la fusion des ensembles qui se résumeront chacune en un seul point. A titre d'illustration, on a représenté sur les figures 4A, 4B et 4C, dans un espace image (illustré par un référentiel comprenant un axe de distance D et un axe de fréquence Doppler FD), la mise en correspondance réalisée par le dispositif 1 (via notamment la génération d'accumulateurs A1, A2 et A3 précisés ci-après).

Les images générées par le radar SAR 2 sont soumises, préalablement, dans une étape antérieure à la mise en œuvre du procédé PR, à un traitement interférométrique avant d'être ensuite utilisées à une étape de seuillage E1 (figure 5) du procédé PR. Le traitement interférométrique est réalisé par l'unité 5 (figure 1). Ce traitement interférométrique permet d'obtenir à partir des images multivoies, une image voie somme et des cartes angulaires en azimut et en élévation.

Les images (SAR) multivoies sont générées par le radar SAR 2 suivant une séquence temporelle donnée. Le traitement interférométrique est mis en œuvre par l'unité 5, en fonction de l'architecture de réception (nombre de voies, géométrie de l'antenne) du radar SAR 2.

Par exemple, dans le cas d'une architecture de radar SAR à quatre quadrants (ou voies) de réception, on peut prévoir que le signal est émis par une voie et que les quatre voies de réception acquièrent le signal retour. On forme ensuite par le biais du traitement SAR, les quatre images par voie. Pour réaliser l'interférométrie, on peut employer l'algorithme « Monopulse ». Originellement, l'algorithme « Monopulse » tire son nom de son usage sur l'écho retour d'une seule impulsion émise. Dans le cas des images, on applique l'algorithme sur chacun des pixels distance et doppler. On crée différents signaux (somme et différence) grâce aux différentes voies. Dans ce cas, le ratio voie différence sur voie somme (deux ratios pour les deux axes) permet de remonter à la différence de marche, porteuse de l'information d'écartométrie.

Après ce traitement interférométrique, on obtient, pour chaque instant (de mesure) de la séquence temporelle :

- une image voie somme, représentant une somme cohérente (dans C) des images SAR de chacune des voies de réception du radar SAR 2 ; et
- une carte angulaire en azimut et en élévation. Une telle carte angulaire est de même dimension que l'image voie somme, avec des niveaux de pixels qui correspondent aux angles d'élévation El et aux an-gles d'azimut Az respectivement.

Cette mise en œuvre présente plusieurs avantages, et en particulier :

- l'unique condition imposée par le procédé PR sur le traitement interférométrique est de fournir deux angles estimés (azimut et élévation) par pixel de l'image SAR, quelle que soit l'architecture du radar SAR multivoie permettant d'obtenir ces données ;
- l'interférométrie image est robuste, au premier ordre, aux distorsions induites dans l'image SAR par les objets mobiles ; et
- la séquence temporelle peut être réalisée dans un intervalle de temps réduit (avec une acquisition compacte dans le temps) pour une optimalité de la mise en correspondance future, comme précisé ci-dessous.

Le procédé PR comprend, comme représenté sur la figure 5, une suite d'étapes E1 à E5 comprenant :

- une étape de seuillage E1, mise en œuvre par l'unité de seuillage 6 (figure 1), consistant à réaliser un seuillage adaptatif de manière à générer un masque de segmentation pour chacune des images voie somme (par image multivoie) ;
- une étape de traitement E2, mise en œuvre par l'unité de traitement 7, consistant à réaliser, pour chacun des masques de segmentation générés à l'étape de seuillage E1, une accumulation de mesures de manière à générer, pour chacun de ces masques de segmentation, au moins un accumulateur et un profil d'énergie ;
- une étape d'alignement E3, mise en œuvre par l'unité d'alignement 8, consistant à aligner (ou recaler ou rephaser) les accumulateurs et les profils d'énergie (générés à l'étape de traitement E2) de manière à obtenir des accumulateurs dits recalés et des profils d'énergie dits recalés ;
- une étape de calcul E4, mise en œuvre par l'unité de calcul 9, consistant à calculer, pour chacun des masques de segmentation, à partir des accumulateurs recalés et des profils d'énergie recalés obtenus à l'étape d'alignement E3, un nuage unitaire via une première fusion dite unitaire ; et
- une étape de fusion E5, mise en œuvre par l'unité de fusion 10, consistant à fusionner (via une fusion terminale) les nuages unitaires obtenus à l'étape de calcul E4, de manière à générer ledit nuage 3D optimisé.

Dans un mode de réalisation préféré, l'étape de seuillage E1 comprend notamment, comme représenté sur la figure 5 :

- une sous-étape E1A consistant à comparer le niveau de l'intensité de chaque pixel à au moins un seuil d'intensité minimale, et de préférence à la fois à un seuil d'intensité minimale et à un seuil d'intensité maximale ; et
- une sous-étape E1B consistant à retenir dans le masque de segmentation uniquement les pixels dont l'intensité est supérieure à ce seuil d'intensité minimale, ou dans le cas d'une comparaison à la fois à un seuil d'intensité minimale et à un seuil d'intensité maximale, à retenir uniquement les pixels dont l'intensité est comprise entre ces seuils (c'est-à-dire inférieure au seuil d'intensité maximale et supérieure au seuil d'intensité minimale).

Le masque de segmentation obtenu est une carte binaire de même taille que l'image voie somme, dans laquelle les pixels retenus à la sous-étape E1B (suite à la comparaison mise en œuvre à la sous-étape E1A) sont à 1 et les pixels non retenus (suite à la comparaison) sont à 0.

La sous-étape E1B consiste à redéfinir les cartes angulaires en ne conservant que les points présents dans le masque de segmentation.

Dans un mode de réalisation particulier, la sous-étape E1A consiste :

- à calculer un quantile supérieur sur l'intensité de l'image SAR voie somme (module au carré de l'image) pour définir un seuil maximum à retenir dans la segmentation (par exemple, un quantile à 100% pour un seuillage jusqu'au pic maximum dans l'image) ;
- à calculer un seuil bas via une dynamique choisie (en dB), par exemple 40 dB de dynamique ; et
- à réaliser un seuillage en comparant chaque niveau (de pixel) aux seuils haut et bas de manière à obtenir un masque de segmentation binaire des points retenus (valeur 0 pour les pixels inférieurs au seuil bas et valeur 1 pour les pixels entre le seuil bas et le seuil haut).

En outre, dans un mode de réalisation particulier, l'étape de seuillage E1 comprend également une sous-étape E1C, mise en œuvre après la sous-étape E1B, consistant à réaliser un filtrage morphologique (opération d'ouverture morphologique), pour éliminer les petits éléments isolés dans la signature (correspondant par exemple à de fausses alarmes sur le bruit thermique).

Cette étape de seuillage E1 présente notamment les avantages suivants :

- la dynamique haute de la signature comprend les points les plus stables et majoritaires dans la radiométrie de l'objet ; et
- la dynamique haute (points présentant les rapports SNR les plus élevés) est la moins entachée par le bruit thermique.

L'étape de seuillage E1 permet ainsi de ne retenir que les contributeurs les plus forts de chaque signature SAR et donc présentant le meilleur rapport signal sur bruit (ou rapport SNR pour « Signal to Noise Ratio » en anglais). L'étape de seuillage E1 fournit un masque de segmentation pour chacun des N instants de la séquence d'images.

Par ailleurs, l'étape de traitement E2 qui suit l'étape de seuillage E1 a pour objectif de découper la signature de l'objet suivant une grille dans son axe de longueur (ou axe longitudinal) dit axe principal AP. La dimension transverse sera perdue au profit d'une accumulation de mesures permettant une réduction du bruit 3D en aval, comme précisé ci-dessous.

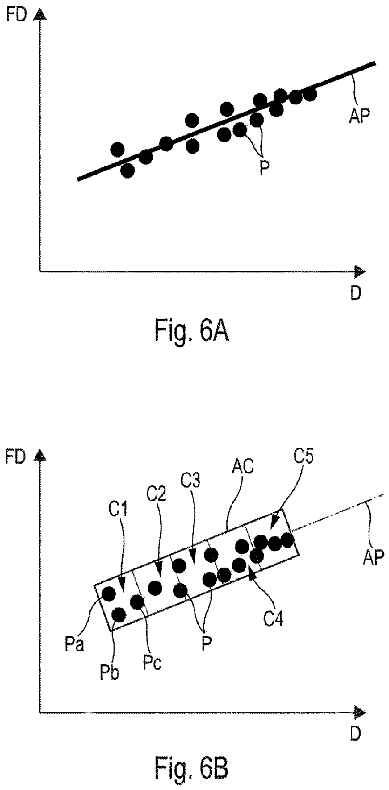

La figure 6A illustre dans l'espace image (distance D et fréquence Doppler FD) un masque de segmentation (comprenant les pixels P) et son axe principal AP.

L'étape de traitement E2 génère, pour chaque masque de segmentation :

- un accumulateur AC (ou dictionnaire d'accumulation ou dictionnaire de pixels) représentant une grille à une dimension comportant une pluralité de cellules (paramètre de taille longitudinale et transverse) telles que les cellules C1, C2, C3, C4 et C5 de l'accumulateur AC de la figure 6B. Chacune des cellules C1 à C5 contient les pixels P du masque de segmentation qui sont situés au niveau de la cellule comme illustré pour les pixels Pa, Pb et Pc de la cellule C1 sur la figure 6B ; et
- un profil d'énergie représentant un vecteur à une dimension dont les valeurs L1 à L5 dépendent des intensités des pixels de chacune des cellules C1 à C5 de l'accumulateur AC, comme précisé ci-dessous.

Pour ce faire, l'étape de traitement E2 comprend la suite de sous-étapes E2A à E2C successives suivantes, qui sont mises en œuvre pour chaque masque de segmentation :

- la sous-étape E2A consistant à mettre en œuvre une analyse en composantes principales (dite « analyse ACP » ci-après) pour estimer un axe de longueur de l'objet, représentant l'axe principal AP (figure 6A). Cette analyse ACP est réalisée sur les coordonnées image des points retenus dans le masque de segmentation. Une pondération de l'analyse ACP peut être considérée notamment par les niveaux des points, par exemple via une moyenne des modules ou des modules au carré (choix amplitude ou choix intensité) des réflectivités des pixels segmentés ;

- la sous-étape E2B consistant à calculer un ou plusieurs accumulateurs AC (ou dictionnaires d'accumulation ou dictionnaires de pixels) selon le nombre d'échantillonnages considérés. Le ou les accumulateurs AC sont échantillonnés selon l'axe principal AP (figure 6B), l'accumulateur AC représentant donc une grille à une dimension comportant une pluralité de cellules C1 à C5. Chacune des cellules C1 à C5 contient les pixels P du masque de segmentation qui sont situés au niveau de la cellule. Plus les instants de la séquence temporelle des images SAR sont rapprochés, plus les images se ressemblent de proche en proche, et ainsi l'angle de présentation de l'objet longiforme évolue lentement. Cela permet d'éviter des erreurs de sens dans la définition des accumulateurs en vérifiant que l'orientation de l'axe principal ne fluctue pas brutalement d'un angle proche de 180° ; et

- la sous-étape E2C consistant à déterminer un ou plusieurs profils d'énergie à partir du ou des accumulateurs AC, le profil d'énergie représentant donc un vecteur à une dimension dont les valeurs dépendent des intensités de pixels de chacune des cellules C1 à C5 de l'accumulateur AC.

Pour calculer le ou les accumulateurs (à la sous-étape E2B), un ensemble commun de valeurs de tailles de cellule (en pixels) est fixé. Les coordonnées minimale et maximale des points sont calculées sur l'axe principal AP. Les cellules sont alors définies par une donnée de l'étendue (point maximal - point minimal) et la taille de cellule. Dans chaque cellule, sont référencés les pixels du masque qui s'y trouvent dans le découpage de la signature SAR. On peut donc disposer de plusieurs accumulateurs dont les tailles de cellules sont variables.

En outre, différents modes de calcul sont envisageables pour déterminer (à la sous-étape E2C) le profil d'énergie d'une cellule à partir des intensités des pixels de la cellule.

En particulier, dans un premier mode de réalisation, la valeur d'énergie du profil d'énergie, attribuée à une cellule, est égale à la moyenne des intensités des pixels de la cellule considérée. En outre, dans un second mode de réalisation, la valeur d'énergie du profil d'énergie, attribuée à une cellule, est égale à la somme des intensités des pixels de la cellule considérée. D'autres modes de calcul sont également envisageables.

L'étape de traitement E2 présente ainsi, notamment, les avantages suivants :

- une maximisation de l'information longitudinale par le sacrifice de l'axe transverse contenant peu d'informations pour des objets longiformes (en particulier des navires qui sont souvent symétriques dans l'axe transverse). Cela permettra notamment une première fusion mise en œuvre à l'étape de calcul E4, comme précisé ci-dessous ;

- le profil d'énergie (déterminé à la sous-étape E2C) va permettre de recaler les accumulateurs issus de chaque masque de segmentation. Cela permettra une mise en correspondance des pixels de chaque mesure de la séquence (mise en œuvre à l'étape d'alignement E3) pour finalement pouvoir fusionner temporellement les estimations 3D à l'étape de fusion E5.

L'étape d'alignement E3 qui suit l'étape de traitement E2 réalise la mise en correspondance des N mesures de la séquence temporelle. Elle vise à recaler les profils d'énergie pour toutes les mesures de la séquence temporelle. Elle est fondamentale pour mettre en correspondance les accumulateurs et les profils d'énergie des instants de la séquence temporelle.

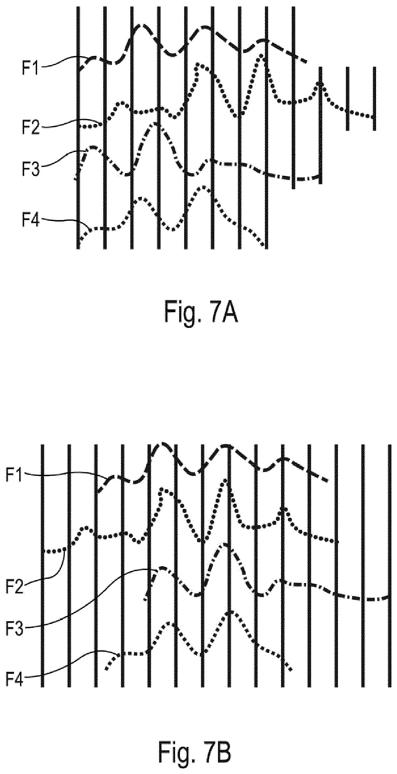

Dans l'exemple de la figure 7A, on a représenté quatre profils d'énergie F1, F2, F3 et F4 (dans cet exemple N=4). Ces profils d'énergie F1 à F4 ont été recalés dans la représentation de la figure 7B.

Cette étape d'alignement E3 prévoit une mise en correspondance dans l'espace image pour obtenir une normalisation des accumulateurs et profils d'énergie.

L'étape d'alignement E3 fournit autant d'accumulateurs et de profils d'énergie que de masques de segmentation (et donc de points de mesures dans la séquence temporelle). Tous les accumulateurs et les profils d'énergie fournis présentent le même nombre de cellules et toutes les cellules d'index donné se correspondent (par exemple la cellule C3 d'un accumulateur AC2 (point temporel 2 de la séquence) décrit au plus proche les pixels de la cellule C3 de l'accumulateur AC1).

Dans l'hypothèse où l'axe longitudinal est potentiellement étiré (ou compressé) entres les masques de segmentation, on prend en compte, de préférence, plusieurs échantillonnages et donc plusieurs accumulateurs et profils d'énergie par masque de segmentation.

Dans un mode de réalisation préféré, l'étape d'alignement E3 comprend les sous-étapes E3A et E3B successives suivantes, qui sont mises en œuvre pour chaque masque de segmentation :

- la sous-étape E3A consistant à réaliser une corrélation du ou des profils pour estimer des translations potentielles et des échantillonnages optimaux ; et

- la sous-étape E3B consistant à réaliser une complétion par des cellules vides et des composantes d'énergie nulles des profils antérieurs ou du profil suivant retenu selon le signe de la translation estimée.

Dans la sous-étape E3A, le ou les profils (un ou plusieurs profils selon le nombre d'échantillonnages) sont corrélés entre eux afin d'estimer les translations potentielles et les échantillonnages optimaux (si plusieurs échantillonnages) entre chacun d'entre eux.

Un exemple de traitement avec une valeur d'échantillonnage fixée est le suivant : corrélation de proche en proche, profil n avec profil n+1. L'indice de translation est estimé en cherchant la localisation du pic dans la corrélation.

En outre, un exemple de traitement avec plusieurs valeurs d'échantillonnage est le suivant : corrélation de proche en proche, profil n avec les M profils n+1 d'échantillonnage variable. Parmi les M corrélations, le profil retenu Mj (et donc l'échantillonnage) est celui dont le pic de corrélation est le plus fort parmi les M pics de corrélation. L'indice de translation est à nouveau estimé par la localisation du pic dans la corrélation Mj.

L'étape d'alignement E3 présente, notamment, les caractéristiques et avantages suivants :

- plus les instants de la séquence temporelle d'acquisition sont rapprochés, plus les images SAR se ressemblent de proche en proche et plus les différences entre les profils diminuent, ce qui assure une bonne qualité de mise en correspondance. Une acquisition de séquence d'images SAR multivoies compacte dans le temps est favorable pour la mise en correspondance. On peut utiliser une séquence d'images SAR multivoies avec recouvrement des intégrations images pour renforcer la transition douce des profils entre les points de la séquence. Cela permet en outre, comme énoncé au préalable pour le traitement E2B, d'empêcher des inversions de sens fortuites entre les accumulateurs ;
- le traitement réalisé à l'étape d'alignement E3 est fondamental pour mettre en correspondance les accumulateurs et les profils d'énergie des instants de la séquence ;
- le choix d'un échantillonnage variable permet de compenser d'éventuelles compressions/dilatations des signatures SAR (masque de segmentation) au cours de la séquence. Le nombre d'échantillonnages à considérer est un paramètre.

Par ailleurs, l'étape de calcul E4 qui suit l'étape d'alignement E3 consiste, pour chacun des masques de segmentation, à définir un nuage unitaire 3D dont le nombre de points est égal au nombre de cellules de l'accumulateur recalé. Ce traitement est la première phase de la fusion dans l'espace 3D, la seconde phase étant mise en œuvre à l'étape de fusion E5.

La sortie consiste en N nuages unitaires où N correspond au nombre de masques de segmentation ou encore de points de la séquence temporelle (nombre d'images multivoies).

L'étape de calcul E4 prévoit, pour chaque masque de segmentation, la définition d'un nuage 3D dont le nombre de points est égal au nombre de cellules de l'accumulateur recalé.

De plus, l'étape de calcul E4 comprend la suite de sous-étapes E4A à E4C successives suivantes, qui sont mises en œuvre pour chaque cellule (ou point du nuage) de l'accumulateur recalé :

- la sous-étape E4A consistant à calculer les composantes Xi, Yi et Zi dites individuelles de chacun des pixels dans la cellule ;
- la sous-étape E4B consistant à calculer les composantes X, Y et Z dites finales de chacune des cellules, à partir de l'ensemble des composantes individuelles Xi, Yi et Zi de la cellule ; et
- la sous-étape E4C consistant à calculer une composante de niveau L, en fonction au moins de la valeur du profil d'énergie F1 à F4 (figure 7B) à la cellule.

Dans un mode de réalisation préféré, pour calculer la composante de niveau dans un mode de réalisation particulier, la sous-étape E4C prend en compte, en plus de la valeur du profil d'énergie à la cellule, la somme quadratique des écarts-types calculés sur les pixels relocalisés en 3D, contenus dans la cellule.

La sous-étape E4A consiste à calculer des composantes individuelles Xi, Yi et Zi de chacun des pixels Pi dans la cellule Cj de l'accumulateur recalé grâce à des index de distance issus de l'image SAR voie somme et des angles estimés dans les cartes angulaires (relocalisation géométrique). Dans le cas où la cellule de l'accumulateur est vide, les composantes Xi, Yi et Zi sont affectées d'une valeur dite « non définie ».

La sous-étape E4B consiste à définir les composantes terminales X, Y, Z du nuage par le calcul de moyennes statistiques respectives sur Xi, Yi et Zi des points déterminés à la sous-étape E4A.

La sous-étape E4C consiste à calculer la composante de niveau L, qui est de préférence fonction de l'énergie de la cellule (valeur du profil d'énergie à la cellule Cj) et de la somme quadratique des écart-types X, Y et Z calculés sur les pixels relocalisés en 3D contenus dans la cellule :

$$L = f\left(E, \sqrt{\sigma_x^2 + \sigma_y^2 + \sigma_z^2}\right)$$

. Par exemple, on peut calculer la composante de niveau L à l'aide de l'expression suivante :

$$E * \sqrt{\sigma_x^2 + \sigma_y^2 + \sigma_z^2}$$

.

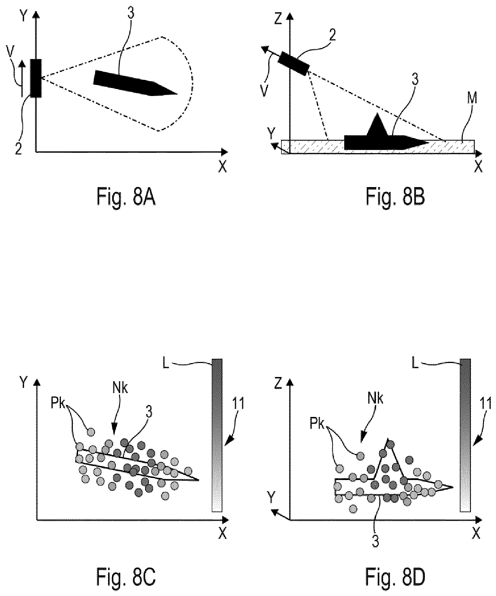

Pour illustrer, l'étape de calcul E4, on a représenté sur les figures 8A et 8B, un cas particulier d'un radar SAR 2 se déplaçant à une vitesse V selon un axe Y et prenant des images d'un objet longiforme 3 correspondant à un navire. Les figures 8A et 8B représentent des vues schématiques, respectivement, dans un plan horizontal XY et dans un plan vertical XZ. Les figures 8C et 8D correspondent, respectivement, aux figures 8A et 8B et montrent un nuage 3D unitaire, référencé Nk, de points Pk, qui est projeté sur l'objet longiforme 3 respectivement dans le plan XY et dans le plan XZ.

De plus, une échelle 11 relative à une composante de niveau L est également représentée sur ces figures 8C et 8D.

Le niveau de gris de la représentation de cette échelle 11 varie avec la valeur de la composante de niveau L. Plus la valeur de la composante de niveau L augmente, plus le niveau de gris correspondant dans la représentation sur les figures augmente. Le niveau de gris tel que représenté (sur les figures 8C et 8D) des points Pk correspond ainsi à la valeur correspondante de la composante de niveau.

Cette étape de calcul E4 réalisant des fusions dite unitaires, permet :

- de lisser le contenu radiométrique (profil d'énergie moyenné par construction sur les cellules de l'accumulateur) sur un voisinage de la signature, ce qui génère un lissage radiométrique spatial ; et
- de lisser le contenu géométrique (moyenne des positions 3D dans chaque cellule d'accumulateur) sur un voisinage de la signature, ce qui génère une réduction du bruit spatial 3D induit par le bruit angulaire de la mesure interférométrique (elle-même induite par le bruit thermique et l'effet de « glint »).

En outre, le choix de la composante de niveau L (au travers d'une fonction f adaptée) permet d'inclure une information de radiométrie complétée par une information liée à l'effet de « glint » qui est une propriété intrinsèque à l'objet dans la mesure (par opposition au bruit thermique qui est une propriété extrinsèque à l'objet).

Par ailleurs, l'étape de fusion E5 qui suit l'étape de calcul E4 a pour objet de réaliser une fusion terminale des nuages individuels pour créer le nuage final (ou nuage 3D optimisé). Elle prévoit un centrage et des rotations des nuages individuels, ainsi que le calcul d'une moyenne des composantes X, Y, Z et L point à point, comme précisé ci-dessous.

Le nuage final (ou nuage 3D optimisé) est communiqué à un dispositif ou système utilisateur à la fin de l'étape de fusion E5.

L'étape de fusion E5 comprend notamment des sous-étapes E5A et E5B successives.

La sous-étape E5A qui est mise en œuvre pour chaque nuage unitaire, comprend les sous-étapes E5Aa, E5Ab et E5Ac successives :

- la sous-étape E5Aa consistant à centrer les composantes X, Y et Z du nuage unitaire (composantes retranchées de leur moyenne statistique), par exemple $X' = X - m(X)$ ;
- la sous-étape E5Ab consistant à mettre en œuvre une analyse en composantes principales pour estimer l'axe longitudinal du nuage unitaire (sans prendre en compte les valeurs des composantes non définies du nuage) ;
- la sous-étape E5Ac consistant à générer une rotation du nuage unitaire 3D pour l'orienter selon un axe prédéfini (par exemple, l'orientation de l'objet par rapport au radar au milieu de la séquence). Une éventuelle incertitude de 180° est facilement levée par la connaissance de la première cellule et de la dernière cellule de l'accumulateur. Le sens du nuage 3D est connu et maîtrisé.

En outre, la sous-étape E5B consiste à réaliser la fusion terminale qui est mise en œuvre en calculant la moyenne statistique, point à point, des composantes X, Y et Z et de la composante de niveau L de l'ensemble des nuages unitaires pour obtenir ledit nuage 3D optimisé.

La sous-étape E5B calcule la moyenne statistique, point à point, des composantes respectives X, Y, Z et L des nuages, par exemple à la valeur i de la composante X :

$$\mathrm{X}_{Fusion}[i] = \frac{1}{N_{nuages}} \sum_{n=1}^{N_{nuages}} X_n[i])$$

Cette étape de fusion E5 permet :

- de lisser le contenu radiométrique sur un voisinage temporel de la signature. Ainsi, le contenu radiométrique est moins fluctuant selon l'angle d'aspect (car l'objet est acquis sous plusieurs angles d'aspect au cours de la séquence) ; et
- de lisser le contenu géométrique sur un voisinage temporel de la signature. Ainsi, on obtient une réduction supplémentaire du bruit spatial 3D induit par le bruit angulaire de la mesure interférométrique (elle-même induite par le bruit thermique et l'effet de « glint »).

Dans un mode de réalisation particulier, l'étape de fusion E5 comprend une sous-étape E5C de filtrage de points aberrants, dont le lissage n'est pas suffisant, ce qui permet d'optimiser le procédé PR.

Des points aberrants sont considérés lorsque l'occurrence de valeurs non définies parmi les composantes qui sont à l'origine de la fusion franchit un seuil fixé. Par exemple, pour un seuil de 0.7, si la fréquence d'occurrence de valeurs non définies dans l'ensemble

$$\left\{ [X_n[i], Y_n[i], Z_n[i], L_n[i]], n \in [\![ 1, N_{nuages} ]\!] \right\}$$

dépasse 0.7, les cordonnée X(i), Y(i), Z(i) et L(i) du nuage terminal sont supprimées (ou, en d'autres termes, le point *i* du nuage est supprimé).

Le filtrage des points aberrants permet ainsi d'éliminer les points dont le lissage n'est pas suffisant (car obtenu sur un taux d'occurrence faible).

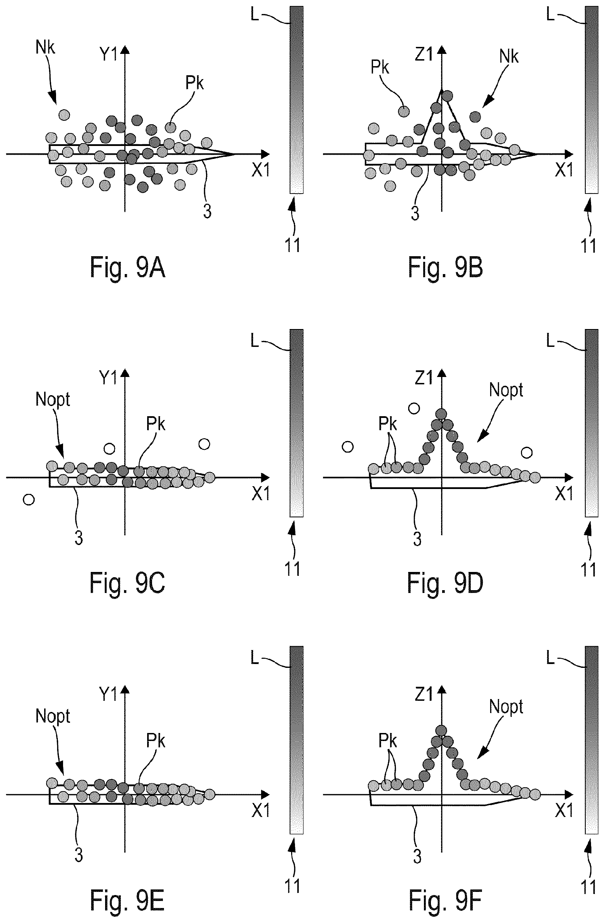

Pour illustrer, l'étape de fusion E5, on a représenté sur les figures 9A et 9B un nuage unitaire Nk centré (obtenu à la sous-étape E5A). Les figures 9A et 9B représentent des vues schématiques, respectivement, dans un plan horizontal X1Y1 et dans un plan vertical X1Z1 positionnés par rapport à l'objet longiforme 3. Les figures 9C et 9D correspondent, respectivement, aux figures 9A et 9B et montrent le nuage 3D optimisé Nopt (obtenu après la fusion terminale réalisée à la sous-étape E5B). De plus, les figures 9E et 9F correspondent, respectivement, aux figures 9C et 9D et montrent le nuage 3D optimisé Nopt après le filtrage des points aberrants (représentés par des ronds à fond blanc sur les figures 9C et 9D). En outre, une échelle 11 relative à la composante de niveau L est également représentée sur ces figures 9A à 9F.

Le procédé PR et/ou le dispositif 1, tels que décrits ci-dessus, permettent de calculer un nuage 3D optimisé d'un objet longiforme 3 à partir d'une séquence d'images SAR générées par un radar SAR 2 multivoies. Ils présentent, notamment, les caractéristiques et avantages suivants :

- ils réalisent un lissage radiométrique : le lissage et la stabilité radiométrique du nuage 3D, par opposition aux images SAR seules (qui sont sensibles à l'angle d'aspect), sont obtenus grâce :

  • à la fusion sur un voisinage de la signature (moyenne sur les cellules des accumulateurs) en prenant en compte l'hypothèse longiforme de l'objet permettant de sacrifier l'axe transverse de la signature ; et
  • à la fusion sur un voisinage temporel de la signature (moyenne sur plusieurs nuages unitaires créés aux différents instants de la séquence d'acquisition) ;

- ils présentent une robustesse au mouvement, via l'utilisation de l'interférométrie, par opposition aux images SAR seules (qui sont floues et déformées) ;
- ils réalisent un lissage géométrique. Une réduction du bruit spatial 3D engendré par le bruit thermique et l'effet de « glint », est obtenue grâce :

  • à l'utilisation d'images SAR multivoies qui présentent un meilleur rapport SNR par rapport au mode natif d'une antenne (profils distances) ;
  • à la segmentation de la partie haute de la signature (masque de segmentation) pour ne retenir que les points de meilleur rapport SNR ;
  • à la fusion sur un voisinage de la signature (moyenne sur les cellules des accumulateurs) ; et
  • à la fusion sur un voisinage temporel de la signature (moyenne sur plusieurs nuages unitaires créés aux différents instants d'une séquence d'acquisition contiguë dans le temps) ; et

- ils peuvent être réalisés selon une grande variété de mises en œuvre différentes. En particulier, ils peuvent être mis en œuvre :

  • avec tout radar SAR multivoies, sous réserve d'estimer deux angles d'azimut et d'élévation ;
  • sur tout objet longiforme, et donc en particulier à des navires ; et
  • dans tout type de situation concernant la visée de l'axe radioélectrique du radar, la vitesse et/ou la hauteur du radar par rapport à l'objet.

Le dispositif 1 et/ou le procédé PR, tels que décrits ci-dessus, peuvent être mis en œuvre dans de nombreuses applications, en particulier (bien que non exclusivement) dans le domaine militaire.

On présente ci-après deux exemples d'applications différentes.

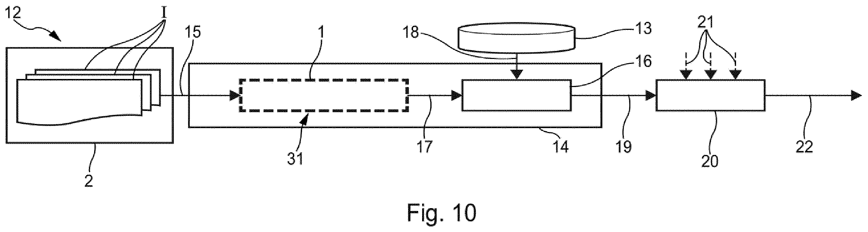

Dans une première application, ledit dispositif 1 fait partie d'un système 12, tel que représenté sur la figure 10, de reconnaissance et d'identification d'une cible longiforme, en particulier un navire. De préférence, ce système 12 est monté à bord d'un engin volant, par exemple un avion de reconnaissance ou un missile tel que le missile 4 de la figure 2, et dont les traitements sont utilisés à bord de l'engin volant.

Dans cette première application, on prévoit une exploitation du nuage 3D optimisé comme descripteur dans une chaîne de reconnaissance et d'identification à base de comparaison à des objets de référence longiformes (notamment des navires).

Comme représenté sur la figure 10, ledit système 12 comporte :

- un radar SAR 2 pourvu d'une pluralité de voies et apte à générer des images I de l'environnement d'une cible longiforme ;
- une base de données 13 contenant des données dites de référence de cibles potentielles ;
- une unité de reconnaissance 14 comprenant une unité de traitement 31 comportant ledit dispositif 1 et intégrant une unité (non représentée) telle que l'unité 5 pour réaliser un traitement interférométrique. L'unité de reconnaissance 14 est configurée pour traiter les images I générées par le radar SAR 2 et reçues via une liaison 15, de manière à en déduire des données dites de détection représentant un nuage 3D optimisé tel que décrit ci-dessus ;
- une unité de comparaison 16 configurée pour comparer ces données de détection (reçues via une liaison 17) aux données de référence reçus de la base de données 13 via une liaison 18 de manière à pouvoir reconnaître et identifier une cible longiforme.

L'unité de traitement 31 comporte donc un dispositif 1, tel que celui décrit ci-dessus, pour générer un nuage 3D optimisé de points illustrant la cible longiforme. Cette cible longiforme peut correspondre à un objet à désigner, qui est transmis à un dispositif utilisateur (de préférence embarqué) via une liaison 19.

De plus, dans un mode de réalisation préféré, tel que représenté sur la figure 10, le système 12 comporte également une unité de décision 20 utilisant les données transmises par l'unité de comparaison 16 et des données supplémentaires reçues via des liaisons 21, en particulier d'autres données relatives à une désignation, pour prendre une décision finale relative à une désignation d'un objectif. L'unité de décision 20 peut transmettre le résultat de son traitement via une liaison 22.

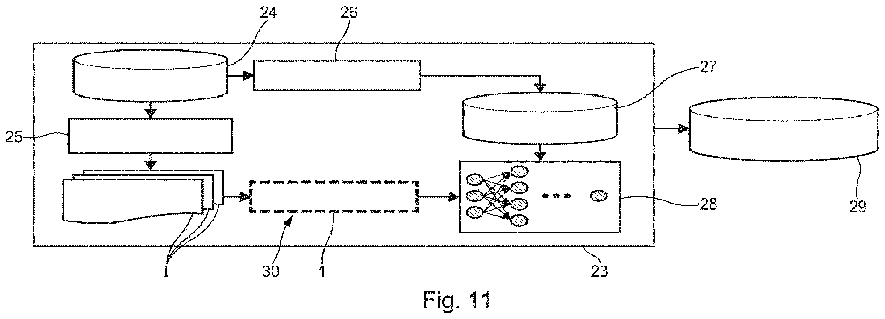

En outre, dans une seconde application, ledit dispositif 1 fait partie d'un système 23, tel que représenté sur la figure 11, de génération d'une base de données de cibles représentant un même type d'objet longiforme, en particulier un navire.

Dans cette seconde application, relative notamment à une préparation de mission, on utilise un calcul de descripteurs pour la création des entrées de préparation de mission.

Le système 23 comporte, comme représenté sur la figure 11 :

- une base de données 24 comprenant des modèles CAO d'objets ;
- un générateur 25 de scène de radar à synthèse d'ouverture multivoies, lié à la base de données 24 et apte à simuler des images SAR multivoies (images I) ;
- une unité de traitement 30 intégrant une unité (non représentée) telle que l'unité 5 pour réaliser un traitement interférométrique et comprenant un dispositif 1 tel que décrit ci-dessus. L'unité de traitement 30 est configurée pour traiter les images I générées par le générateur 25 pour générer un nuage 3D optimisé de points illustrant un objet longiforme et pour fournir des données correspondantes ;
- un unité de création 26 d'une base de référence, liée à la base de données 24 et apte à créer une base de référence 27 (par exemple des silhouettes de CAO) ; et
- une unité d'apprentissage 28 configurée pour réaliser un apprentissage à partir des données (par exemple le nuage optimisé, ou bien une donnée qui met en forme ce dernier, comme par exemple une image recalculée sur ce nuage) reçues du dispositif 1 ainsi que de la base de référence 27, et pour fournir une métrique entraînée et la base de référence. L'unité d'apprentissage 28 réalise l'apprentissage d'une métrique de comparaison (par Intelligence Artificielle) utilisant les descripteurs sur données de synthèse.

Cette métrique entraînée (apprentissage) et la base de référence peuvent être fournies à une unité 29 comme entrées de préparation de mission.

**Revendications**

**1.** Procédé pour générer un nuage 3D optimisé de points illustrant un objet longiforme (3), en particulier un navire (33), à partir d'une séquence d'images de l'environnement de l'objet longiforme (3) générées par un radar à synthèse d'ouverture (2) pourvu d'une pluralité de voies, chacune des images dites multivoies générés par le radar à synthèse d'ouverture (2) comprenant une image à synthèse d'ouverture par voie, les images multivoies étant soumises à un traitement interférométrique permettant d'obtenir, pour chaque image multivoie, une image voie somme et des cartes angulaires en azimut et en élévation, le procédé étant mis en œuvre par un dispositif comportant au moins une unité de seuillage, une unité de traitement, une unité d'alignement, une unité de calcul et une unité de fusion, **caractérisé en ce qu'**il comporte au moins les étapes suivantes :

- une étape de seuillage (E1), mise en œuvre par l'unité de seuillage, consistant à réaliser un seuillage adaptatif de manière à générer un masque de segmentation pour chacune des images dites voie somme ;
- une étape de traitement (E2), mise en œuvre par l'unité de traitement, consistant à réaliser, pour chacun desdits masques de segmentation, une accumulation de mesures de manière à générer pour chacun desdits masques de segmentation, au moins un accumulateur (AC) et un profil d'énergie (F1 à F4), l'étape de traitement (E2) comprenant la suite de sous-étapes (E2A, E2B, E2C) successives suivantes, qui sont mises en œuvre pour chaque masque de segmentation :

  • une sous-étape (E2A) consistant à mettre en œuvre une analyse en composantes principales pour estimer un axe de longueur de l'objet longiforme (3), représentant un axe dit principal (AP) ;
  • une sous-étape (E2B) consistant à calculer au moins un accumulateur (AC) échantillonné selon l'axe principal (AP), l'accumulateur (AC) représentant une grille à une dimension comportant une pluralité de cellules (C1 à C5), chacune desdites cellules (C1 à C5) contenant les pixels du masque de segmentation qui sont situés au niveau de la cellule ; et
  • une sous-étape (E2C) consistant à calculer au moins un profil d'énergie (F1 à F4) à partir de l'accumulateur (AC), le profil d'énergie (F1 à F4) représentant un vecteur à une dimension dont les valeurs dépendent des intensités des pixels de chacune des cellules de l'accumulateur ;

- une étape d'alignement (E3), mise en œuvre par l'unité d'alignement, consistant à recaler les accumulateurs (AC) et les profils d'énergie (F1 à F4) de manière à obtenir des accumulateurs (AC) dits recalés et des profils d'énergie dits recalés, l'étape d'alignement (E3) fournissant autant d'accumulateurs et de profils d'énergie que de masques de segmentation, tous les accumulateurs et les profils d'énergie fournis présentant le même nombre de cellules et toutes les cellules d'index donné se correspondant ;
- une étape de calcul (E4), mise en œuvre par l'unité de calcul, consistant à calculer, pour chacun desdits masques de segmentation, à partir des accumulateurs recalés et des profils d'énergie recalés obtenus à l'étape d'alignement, un nuage unitaire (Nk) via une fusion unitaire, l'étape de calcul (E4) consistant, pour chacun des masques de segmentation, à définir un nuage unitaire dont le nombre de points est égal au nombre de cellules de l'accumulateur recalé, et comprenant la suite de sous-étapes (E4A, E4B, E4C) successives suivantes, qui sont mises en œuvre pour chaque cellule de l'accumulateur recalé :

    • une sous-étape (E4A) consistant à calculer un ensemble de composantes (Xi, Yi, Zi) dites individuelles de chacun des pixels dans la cellule ;
    • une sous-étape (E4B) consistant à calculer un ensemble de composantes (X, Y, Z) dites globales pour chacune des cellules, à partir de l'ensemble des composantes individuelles (Xi, Yi, Zi) de la cellule ; et
    • une sous-étape(E4C) consistant à calculer une composante de niveau (L), en fonction au moins de la valeur du profil d'énergie à la cellule ; et

- une étape de fusion (E5), mise en œuvre par l'unité de fusion, consistant à fusionner les nuages unitaires (Nk), de manière à obtenir ledit nuage 3D optimisé (Nopt), l'étape de fusion (E5) comprenant :

    • une sous-étape (E5A) consistant, pour chaque nuage unitaire, à réaliser les opérations suivantes :

        - centrer les composantes globales du nuage unitaire ;
        - mettre en œuvre une analyse en composantes principales pour estimer l'axe longitudinal du nuage unitaire ; et
        - générer une rotation du nuage unitaire pour l'orienter selon un axe prédéfini ; et

    • une sous-étape (E5B) consistant à calculer la moyenne statistique, point à point, des composantes globales (X, Y, Z) et de la composante de niveau (L) de l'ensemble des nuages unitaires pour obtenir ledit nuage 3D optimisé.

2. Procédé selon la revendication 1,

**caractérisé en ce que** l'étape de seuillage (E1) comprend :

    - une sous-étape (E1A) consistant à comparer le niveau de l'intensité de chaque pixel à au moins un seuil d'intensité minimale ; et
    - une sous-étape (E1B) consistant à retenir uniquement les pixels dont l'intensité est supérieure à ce seuil d'intensité minimale dans le masque de segmentation qui est une carte binaire de même taille que l'image voie somme dans laquelle les pixels retenus sont à 1 et les pixels non retenus sont à 0.

3. Procédé selon la revendication 2,
**caractérisé en ce qu'**à l'étape de seuillage (E1), on réalise, de plus, une sous-étape (E1C) consistant à réaliser un filtrage morphologique.

4. Procédé selon l'une quelconque des revendications précédentes,
**caractérisé en ce que** l'étape d'alignement (E3) comprend la suite de sous-étapes (E3A, E3B) successives suivantes, qui sont mises en œuvre pour chaque masque de segmentation :

    - une sous-étape (E3A) consistant à réaliser une corrélation du ou des profils pour estimer des translations potentielles et des échantillonnages optimaux ; et
    - une sous-étape (E3B) consistant à réaliser une complétion par des cellules vides et des composantes d'énergie nulles de profils antérieurs ou du profil suivant.

5. Procédé selon l'une quelconque des revendications précédentes,
**caractérisé en ce que** le calcul de la composante de niveau (L) prend en compte, en plus de la valeur du profil d'énergie à la cellule, la somme quadratique des écarts-types calculés sur les pixels relocalisés en 3D, contenus dans la cellule.

6. Procédé selon l'une quelconque des revendications précédentes,
**caractérisé en ce que** l'étape de fusion (E5) comprend une sous-étape (E5C) de filtrage de points aberrants.

7. Dispositif pour générer un nuage 3D optimisé de points illustrant un objet longiforme (3), en particulier un navire (33), à partir d'une séquence d'images de l'environnement de l'objet longiforme (3) générées par un radar à synthèse d'ouverture (2) pourvu d'une pluralité de voies, chacune des images dites multivoies générés par le radar à synthèse d'ouverture (2) comprenant une image à synthèse d'ouverture par voie, les images multivoies étant soumises à un traitement interférométrique permettant d'obtenir, pour chaque image multivoie, une image voie somme et des cartes angulaires en azimut et en élévation,

**caractérisé en ce qu'**il comporte au moins :

- une unité de seuillage (6) configurée pour réaliser un seuillage adaptatif de manière à générer un masque de segmentation pour chacune des images dites multivoies, chacune des images multivoies comprenant une image voie somme et des cartes angulaires en azimut et en élévation ;
- une unité de traitement (7) configurée pour réaliser, pour chacun desdits masques de segmentation, une accumulation de mesures de manière à générer pour chacun desdits masques de segmentation, au moins un accumulateur (AC) et un profil d'énergie (F1 à F4), l'unité de traitement (7) étant configurée pour, pour chaque masque de segmentation :

  • mettre en œuvre une analyse en composantes principales pour estimer un axe de longueur de l'objet longiforme (3), représentant un axe dit principal (AP) ;
  • calculer au moins un accumulateur (AC) échantillonné selon l'axe principal (AP), l'accumulateur (AC) représentant une grille à une dimension comportant une pluralité de cellules (C1 à C5), chacune desdites cellules (C1 à C5) contenant les pixels du masque de segmentation qui sont situés au niveau de la cellule ; et
  • calculer au moins un profil d'énergie (F1 à F4) à partir de l'accumulateur (AC), le profil d'énergie (F1 à F4) représentant un vecteur à une dimension dont les valeurs dépendent des intensités des pixels de chacune des cellules de l'accumulateur ;

- une unité d'alignement (8) configurée pour recaler les accumulateurs (AC) et les profils d'énergie (F1 à F4) de manière à obtenir des accumulateurs dits recalés et des profils d'énergie dits recalés, autant d'accumulateurs et de profils d'énergie que de masques de segmentation étant fournis, tous les accumulateurs et les profils d'énergie fournis présentant le même nombre de cellules et toutes les cellules d'index donné se correspondant ;
- une unité de calcul (9) configurée pour calculer, pour chacun desdits masques de segmentation, à partir des accumulateurs recalés et des profils d'énergie recalés, un nuage unitaire (Nk) via une fusion unitaire, l'unité de calcul (9) étant configurée pour, pour chacun des masques de segmentation, définir un nuage unitaire dont le nombre de points est égal au nombre de cellules de l'accumulateur recalé, et, pour chaque cellule de l'accumulateur recalé :

  • calculer un ensemble de composantes (Xi, Yi, Zi) dites individuelles de chacun des pixels dans la cellule ;
  • calculer un ensemble de composantes (X, Y, Z) dites globales pour chacune des cellules, à partir de l'ensemble des composantes individuelles (Xi, Yi, Zi) de la cellule ; et
  • calculer une composante de niveau (L), en fonction au moins de la valeur du profil d'énergie à la cellule ; et

- une unité de fusion (10) configurée pour fusionner les nuages unitaires (Nk), de manière à obtenir ledit nuage 3D optimisé (Nopt), l'unité de fusion (10) étant configurée pour :

  • pour chaque nuage unitaire, réaliser les opérations suivantes :

    - centrer les composantes globales du nuage unitaire ;
    - mettre en œuvre une analyse en composantes principales pour estimer l'axe longitudinal du nuage unitaire ; et
    - générer une rotation du nuage unitaire pour l'orienter selon un axe prédéfini ; et

  • calculer la moyenne statistique, point à point, des composantes globales (X, Y, Z) et de la composante de niveau (L) de l'ensemble des nuages unitaires pour obtenir ledit nuage 3D optimisé.

8. Système de reconnaissance et d'identification d'une cible représentant un objet longiforme, en particulier un navire, ledit système (12) comportant au moins :

  - un radar à synthèse d'ouverture (2) pourvu d'une pluralité de voies et apte à générer des images de l'environnement de la cible longiforme (3) ;
  - une unité de traitement (31) configurée pour traiter les images générées par le radar à synthèse d'ouverture (2) de manière à en déduire des données dites de détection ;
- une base de données (13) contenant des données dites de référence de cibles ; et
- une unité de comparaison (16) configurée pour comparer les données de détection aux données de référence de la base de données (13) de manière à pouvoir reconnaître et identifier une cible longiforme (3),

**caractérisé en ce que** l'unité de traitement (31) comprend un dispositif (1) selon la revendication 7 et une unité réalisant un traitement interférométrique.

9. Système selon la revendication 8,
**caractérisé en ce qu'**il comporte une unité de décision (20) utilisant les données d'identification d'une cible longiforme transmises par l'unité de comparaison (16) et des données supplémentaires pour prendre une décision de désignation d'objectif.

10. Système de génération d'une métrique entraînée et d'une base de référence relatives à au moins un type d'objet longiforme, en particulier un navire, ledit système (23) comportant au moins :

    - une base de modèles d'objets (24), et au moins d'objets longiformes ;
    - un générateur de scène (25) de radar à synthèse d'ouverture multivoies, lié à la base de modèles d'objets (24) et apte à simuler des images SAR multivoies (1) ;
    - une unité de traitement (30) configurée pour traiter les images générées par le générateur de scène (25) pour créer un nuage de points illustrant un objet longiforme et fournir des données ;
    - une unité (26) de création d'une base de référence, liée à la base de modèles d'objets (24) et apte à créer une base de référence (27) ; et
    - une unité d'apprentissage (28) configurée pour réaliser un apprentissage à partir des données reçues de l'unité de traitement (30) et de la base de référence (27) et pour fournir la métrique entraînée et la base de référence,

**caractérisé en ce que** l'unité de traitement (30) comprend un dispositif (1) selon la revendication 7 et une unité réalisant au préalable un traitement interférométrique.

**Patentansprüche**

1. Verfahren zum Erzeugen einer optimierten 3D-Punktwolke, die ein längliches Objekt (3), insbesondere ein Schiff (33), darstellt, auf Grundlage einer Sequenz von Bildern der Umgebung des länglichen Objekts (3), die von einem Apertursynthese-Radar (2), das mit einer Vielzahl von Kanälen versehen ist, erzeugt werden, wobei jedes der sogenannten Mehrkanalbilder, die von dem Apertursynthese-Radar (2) erzeugt werden, ein Apertursynthese-Bild pro Kanal umfasst, wobei die Mehrkanalbilder einer interferometrischen Verarbeitung unterzogen werden, die es ermöglicht, für jedes Mehrkanalbild ein Summenkanalbild und Winkelkarten in Azimut und in Elevation zu erhalten, wobei das Verfahren von einer Vorrichtung durchgeführt wird, die mindestens eine Schwellenwertbildungseinheit, eine Verarbeitungseinheit, eine Ausrichtungseinheit, eine Berechnungseinheit und eine Fusionseinheit umfasst,
**dadurch gekennzeichnet, dass** es mindestens die folgenden Schritte umfasst:

    - einen Schwellenwertbildungsschritt (E1), der von der Schwellenwertbildungseinheit durchgeführt wird und darin besteht, eine adaptive Schwellenwertbildung auszuführen, um für jedes der sogenannten Summenkanalbilder eine Segmentierungsmaske zu erzeugen;
    - einen Verarbeitungsschritt (E2), der von der Verarbeitungseinheit durchgeführt wird und darin besteht, für jede der Segmentierungsmasken eine Akkumulation von Messungen auszuführen, um für jede der Segmentierungsmasken mindestens einen Akkumulator (AC) und ein Energieprofil (F1 bis F4) zu erzeugen, wobei der Verarbeitungsschritt (E2) die Abfolge folgender aufeinanderfolgender Teilschritte (E2A, E2B, E2C) umfasst, die für jede Segmentierungsmaske durchgeführt werden:

        - einen Teilschritt (E2A), der darin besteht, eine Hauptkomponentenanalyse durchzuführen, um eine Längsachse des länglichen Objekts (3) zu schätzen, die eine sogenannte Hauptachse (AP) darstellt;
        - einen Teilschritt (E2B), der darin besteht, mindestens einen Akkumulator (AC) zu berechnen, der entlang der Hauptachse (AP) abgetastet wird, wobei der Akkumulator (AC) ein eindimensionales Gitter darstellt, das eine Vielzahl von Zellen (C1 bis C5) umfasst, wobei jede der Zellen (C1 bis C5) die Pixel der Segmentierungsmaske enthält, die sich im Bereich der Zelle befinden; und
        - einen Teilschritt (E2C), der darin besteht, mindestens ein Energieprofil (F1 bis F4) auf Grundlage des Akkumulators (AC) zu berechnen, wobei das Energieprofil (F1 bis F4) einen eindimensionalen Vektor darstellt, dessen Werte von den Intensitäten der Pixel jeder der Zellen des Akkumulators abhängen;

- einen Ausrichtungsschritt (E3), der von der Ausrichtungseinheit durchgeführt wird und darin besteht, die Akkumulatoren (AC) und die Energieprofile (F1 bis F4) neu festzulegen, um sogenannte neu festgelegte Akkumulatoren (AC) und sogenannte neu festgelegte Energieprofile zu erhalten, wobei der Ausrichtungsschritt (E3) so viele Akkumulatoren und Energieprofile liefert, wie es Segmentierungsmasken gibt, wobei alle gelieferten Akkumulatoren und Energieprofile die gleiche Anzahl von Zellen aufweisen und alle Zellen mit einem gegebenen Index einander entsprechen;

- einen Berechnungsschritt (E4), der von der Berechnungseinheit durchgeführt wird und darin besteht, für jede der Segmentierungsmasken auf Grundlage der neu festgelegten Akkumulatoren und der neu festgelegten Energieprofile, die im Ausrichtungsschritt erhalten wurden, eine Einheitswolke (Nk) über eine Einheitsfusion zu berechnen, wobei der Berechnungsschritt (E4) darin besteht, für jede der Segmentierungsmasken eine Einheitswolke zu definieren, deren Anzahl an Punkten gleich der Anzahl an Zellen des neu festgelegten Akkumulators ist, und die Abfolge folgender aufeinanderfolgender Teilschritte (E4A, E4B, E4C) umfasst, die für jede Zelle des neu festgelegten Akkumulators durchgeführt werden:

  - einen Teilschritt (E4A), der darin besteht, eine Gesamtheit von sogenannten individuellen Komponenten $(X_i, Y_i, Z_i)$ jedes der Pixel in der Zelle zu berechnen;
  - einen Teilschritt (E4B), der darin besteht, eine Gesamtheit von sogenannten globalen Komponenten $(X, Y, Z)$ für jede der Zellen auf Grundlage der Gesamtheit der individuellen Komponenten $(X_i, Y_i, Z_i)$ der Zelle zu berechnen; und
  - einen Teilschritt (E4C), der darin besteht, eine Levelkomponente (L) in Abhängigkeit von mindestens dem Wert des Energieprofils an der Zelle zu berechnen; und

- einen Fusionsschritt (E5), der von der Fusionseinheit durchgeführt wird und darin besteht, die Einheitswolken (Nk) zu fusionieren, um die optimierte 3D-Wolke (Nopt) zu erhalten, wobei der Fusionsschritt (E5) umfasst:

  - einen Teilschritt (E5A), der darin besteht, für jede Einheitswolke die folgenden Operationen auszuführen:

    - Zentrieren der globalen Komponenten der Einheitswolke;
    - Durchführen einer Hauptkomponentenanalyse, um die Längsachse der Einheitswolke zu schätzen; und
    - Erzeugen einer Drehung der Einheitswolke, um sie entlang einer vordefinierten Achse auszurichten; und

  - einen Teilschritt (E5B), der darin besteht, das statistische Mittel, Punkt für Punkt, der globalen Komponenten $(X, Y, Z)$ und der Levelkomponente (L) der Gesamtheit der Einheitswolken zu berechnen, um die optimierte 3D-Wolke zu erhalten.

2. Verfahren nach Anspruch 1, **dadurch gekennzeichnet, dass** der Schwellenwertbildungsschritt (E1) umfasst:

   - einen Teilschritt (E1A), der darin besteht, den Level der Intensität jedes Pixels mit mindestens einem minimalen Intensitätsschwellenwert zu vergleichen; und
   - einen Teilschritt (E1B), der darin besteht, nur die Pixel, deren Intensität größer als dieser minimale Intensitätsschwellenwert ist, in der Segmentierungsmaske zu behalten, die eine binäre Karte derselben Größe ist wie das Summenkanalbild, wobei die behaltenen Pixel auf 1 stehen und die nicht behaltenen Pixel auf 0 stehen.

3. Verfahren nach Anspruch 2, **dadurch gekennzeichnet, dass** im Schwellenwertbildungsschritt (E1) zusätzlich ein Teilschritt (E1C) ausgeführt wird, der darin besteht, eine morphologische Filterung auszuführen.

4. Verfahren nach einem der vorstehenden Ansprüche, **dadurch gekennzeichnet, dass** der Ausrichtungsschritt (E3) die Abfolge folgender aufeinanderfolgender Teilschritte (E3A, E3B) umfasst, die für jede Segmentierungsmaske durchgeführt werden:

   - einen Teilschritt (E3A), der darin besteht, eine Korrelation des Profils oder der Profile auszuführen, um potenzielle Verschiebungen und optimale Abtastungen zu schätzen; und
   - einen Teilschritt (E3B), der darin besteht, eine Vervollständigung durch leere Zellen und Nullenergiekomponenten früherer Profile oder des folgenden Profils auszuführen.

5. Verfahren nach einem der vorstehenden Ansprüche, **dadurch gekennzeichnet, dass** das Berechnen der Levelkomponente (L) zusätzlich zum Wert des Energieprofils an der Zelle die quadratische Summe der Standardabweichungen berücksichtigt, die für die in 3D neu lokalisierten Pixel, die in der Zelle enthalten sind, berechnet wurden.

**6.** Verfahren nach einem der vorstehenden Ansprüche, **dadurch gekennzeichnet, dass** der Fusionsschritt (E5) einen Teilschritt (E5C) des Filterns von Ausreißerpunkten umfasst.

**7.** Vorrichtung zum Erzeugen einer optimierten 3D-Punktwolke, die ein längliches Objekt (3), insbesondere ein Schiff (33), darstellt, auf Grundlage einer Sequenz von Bildern der Umgebung des länglichen Objekts (3), die von einem Apertursynthese-Radar (2), das mit einer Vielzahl von Kanälen versehen ist, erzeugt werden, wobei jedes der sogenannten Mehrkanalbilder, die von dem Apertursynthese-Radar (2) erzeugt werden, ein Apertursynthese-Bild pro Kanal umfasst, wobei die Mehrkanalbilder einer interferometrischen Verarbeitung unterzogen werden, die es ermöglicht, für jedes Mehrkanalbild ein Summenkanalbild und Winkelkarten in Azimut und in Elevation zu erhalten

**dadurch gekennzeichnet, dass** sie mindestens umfasst:

- eine Schwellenwertbildungseinheit (6), die dafür konfiguriert ist, eine adaptive Schwellenwertbildung auszuführen, um für jedes der sogenannten Mehrkanalbilder eine Segmentierungsmaske zu erzeugen, wobei jedes der Mehrkanalbilder ein Summenkanalbild und Winkelkarten in Azimut und in Elevation umfasst;
- eine Verarbeitungseinheit (7), die dafür konfiguriert ist, für jede der Segmentierungsmasken eine Akkumulation von Messungen auszuführen, um für jede der Segmentierungsmasken mindestens einen Akkumulator (AC) und ein Energieprofil (F1 bis F4) zu erzeugen, wobei die Verarbeitungseinheit (7) dafür konfiguriert ist, für jede Segmentierungsmaske:

- eine Hauptkomponentenanalyse durchzuführen, um eine Längsachse des länglichen Objekts (3) zu schätzen, die eine sogenannte Hauptachse (AP) darstellt;
- mindestens einen Akkumulator (AC) zu berechnen, der entlang der Hauptachse (AP) abgetastet wird, wobei der Akkumulator (AC) ein eindimensionales Gitter darstellt, das eine Vielzahl von Zellen (C1 bis C5) umfasst, wobei jede der Zellen (C1 bis C5) die Pixel der Segmentierungsmaske enthält, die sich im Bereich der Zelle befinden; und
- mindestens ein Energieprofil (F1 bis F4) auf Grundlage des Akkumulators (AC) zu berechnen, wobei das Energieprofil (F1 bis F4) einen eindimensionalen Vektor darstellt, dessen Werte von den Intensitäten der Pixel jeder der Zellen des Akkumulators abhängen;

- eine Ausrichtungseinheit (8), die dafür konfiguriert ist, die Akkumulatoren (AC) und die Energieprofile (F1 bis F4) neu festzulegen, um sogenannte neu festgelegte Akkumulatoren und sogenannte neu festgelegte Energieprofile zu erhalten, wobei so viele Akkumulatoren und Energieprofile geliefert werden, wie es Segmentierungsmasken gibt, wobei alle gelieferten Akkumulatoren und Energieprofile die gleiche Anzahl von Zellen aufweisen und alle Zellen mit einem gegebenen Index einander entsprechen;
- eine Berechnungseinheit (9), die dafür konfiguriert ist, für jede der Segmentierungsmasken auf Grundlage der neu festgelegten Akkumulatoren und der neu festgelegten Energieprofile, eine Einheitswolke (Nk) über eine Einheitsfusion zu berechnen, wobei die Berechnungseinheit (9) dafür konfiguriert ist, für jede der Segmentierungsmasken eine Einheitswolke zu definieren, deren Anzahl an Punkten gleich der Anzahl an Zellen des neu festgelegten Akkumulators ist, und für jede Zelle des neu festgelegten Akkumulators:

- eine Gesamtheit von sogenannten individuellen Komponenten (Xi, Yi, Zi) jedes der Pixel in der Zelle zu berechnen;
- eine Gesamtheit von sogenannten globalen Komponenten (X, Y, Z) für jede der Zellen auf Grundlage der Gesamtheit der individuellen Komponenten (Xi, Yi, Zi) der Zelle zu berechnen; und
- eine Levelkomponente (L) in Abhängigkeit von mindestens dem Wert des Energieprofils an der Zelle zu berechnen; und

- eine Fusionseinheit (10), die dafür konfiguriert ist, die Einheitswolken (Nk) zu fusionieren, um die optimierte 3D-Wolke (Nopt) zu erhalten, wobei die Fusionseinheit (10) dafür konfiguriert ist:

- für jede Einheitswolke die folgenden Operationen auszuführen:

- Zentrieren der globalen Komponenten der Einheitswolke;
- Durchführen einer Hauptkomponentenanalyse, um die Längsachse der Einheitswolke zu schätzen; und
- Erzeugen einer Drehung der Einheitswolke, um sie entlang einer vordefinierten Achse auszurichten; und

- Berechnen des statistischen Mittels, Punkt für Punkt, der globalen Komponenten (X, Y, Z) und der Levelkomponente (L) der Gesamtheit der Einheitswolken, um die optimierte 3D-Wolke zu erhalten.

8. System zum Erkennen und Identifizieren eines Ziels, das ein längliches Objekt, insbesondere ein Schiff, darstellt, wobei das System (12) mindestens umfasst:

- ein Apertursynthese-Radar (2), das mit einer Vielzahl von Kanälen versehen und in der Lage ist, Bilder von der Umgebung des länglichen Ziels (3) zu erzeugen;
- eine Verarbeitungseinheit (31), die dafür konfiguriert ist, die vom Apertursynthese-Radar (2) erzeugten Bilder zu verarbeiten, um daraus sogenannte Detektionsdaten abzuleiten;
- eine Datenbank (13), die sogenannte Zielreferenzdaten enthält; und
- eine Vergleichseinheit (16), die dafür konfiguriert ist, die Detektionsdaten mit den Referenzdaten aus der Datenbank (13) zu vergleichen, um ein längliches Ziel (3) erkennen und identifizieren zu können,

**dadurch gekennzeichnet, dass** die Verarbeitungseinheit (31) eine Vorrichtung (1) nach Anspruch 7 und eine Einheit umfasst, die eine interferometrische Verarbeitung ausführt.

9. System nach Anspruch 8,
**dadurch gekennzeichnet, dass** es eine Entscheidungseinheit (20) umfasst, die die von der Vergleichseinheit (16) übertragenen Identifikationsdaten eines länglichen Ziels und zusätzliche Daten verwendet, um eine Entscheidung über die Zielfestsetzung zu treffen.

10. System zum Erzeugen einer trainierten Metrik und einer Referenzbank bezüglich mindestens eines Typs eines länglichen Objekts, insbesondere eines Schiffes, wobei das System (23) mindestens umfasst:

- eine Objektmodellbank (24), und mindestens längliche Objekte;
- einen Szenengenerator (25) mit Mehrkanal-Syntheseapertur-Radar, der mit der Objektmodellbank (24) verbunden und in der Lage ist, Mehrkanal-SAR-Bilder (I) zu simulieren;
- eine Verarbeitungseinheit (30), die dafür konfiguriert ist, die vom Szenengenerator (25) erzeugten Bilder zu verarbeiten, um eine Punktwolke zu erzeugen, die ein längliches Objekt darstellt, und Daten zu liefern;
- eine Einheit (26) zum Erzeugen einer Referenzbank, die mit der Objektmodellbank (24) verbunden und in der Lage ist, eine Referenzbank (27) zu erzeugen; und

- eine Lerneinheit (28), die dafür konfiguriert ist, ein Lernen auf Grundlage der von der Verarbeitungseinheit (30) und der Referenzbank (27) empfangenen Daten auszuführen und die trainierte Metrik und die Referenzbank zu liefern,

**dadurch gekennzeichnet, dass** die Verarbeitungseinheit (30) eine Vorrichtung (1) nach Anspruch 7 und eine Einheit umfasst, die im Vorfeld eine interferometrische Verarbeitung ausführt.

**Claims**

1. A method for generating an optimized 3D point cloud illustrating an elongate object (3), in particular a ship (33), from a sequence of images of the environment of the elongate object (3) generated by a synthetic aperture radar (2) provided with a plurality of paths, each of the images referred to as multipath generated by the synthetic aperture radar (2) comprising one synthetic aperture image per path, the multipath images being subjected to an interferometric processing allowing to obtain, for each multipath image, a sum path image and angular maps in azimuth and in elevation, the method being implemented by a device including at least a thresholding unit, a processing unit, an alignment unit, a computing unit and a merging unit (
**characterised in that** it comprises at least the following steps:

- a thresholding step (E1) implemented by the thresholding unit, consisting in carrying out an adaptive thresholding so as to generate a segmentation mask for each of the images referred to as sum path;
- a processing step (E2) implemented by the processing unit, consisting in carrying out, for each of said segmentation masks, an accumulation of measurements so as to generate, for each of said segmentation masks, at least one accumulator (AC) and an energy profile (F1 to F4), the processing step (E2) comprising the following sequence of successive sub-steps (E2A, E2B, E2C), which are implemented for each segmentation mask:

• a sub-step (E2A) consisting in implementing a principal component analysis to estimate a length axis of the elongate object (3), representing an axis referred to as principal (PA);
• a sub-step (E2B) consisting in computing at least one accumulator (AC) sampled along the principal axis (AP), the accumulator (AC) representing a one-dimensional grid comprising a plurality of cells (C1 to C5), each of said cells (C1 to C5) containing the pixels of the segmentation mask that are located at the level of the cell; and
• a sub-step (E2C) consisting in computing at least one energy profile (F1 to F4) from the accumulator (AC), the energy profile (F1 to F4) representing a one-dimensional vector whose values depend on the intensities of the pixels of each of the cells of the accumulator

- an alignment step (E3) implemented by the alignment unit, consisting in calibrating the accumulators (AC) and the energy profiles (F1 to F4) so as to obtain accumulators (AC) referred to as calibrated and energy profiles referred to as calibrated, the alignment step (E3) providing as many accumulators and energy profiles as there are segmentation masks, all the accumulators and the energy profiles provided having the same number of cells and all the cells of a given index corresponding to each other;
- a computing step (E4) implemented by the computing unit, consisting in computing, for each of said segmentation masks, from the calibrated accumulators and the calibrated energy profiles obtained in the alignment step, a unitary cloud (Nk) via a unitary merging, the computing step (E4) consisting, for each of the segmentation masks, in defining a unitary cloud whose number of points is equal to the number of cells of the calibrated accumulator, and comprises the following sequence of successive sub-steps (E4A, E4B, E4C), which are implemented for each cell of the calibrated accumulator:

  • a sub-step (E4A) consisting in computing an assembly of components (Xi, Yi, Zi) referred to as individual of each of the pixels in the cell;
  • a sub-step (E4B) consisting in computing an assembly of components (X, Y, Z) referred to as global for each of the cells, from the assembly of the individual components (Xi, Yi, Zi) of the cell; and
  • a sub-step (E4C) consisting in computing a level component (L), based on at least the value of the energy profile at the cell; and

- a merging step (E5) implemented by the merging unit, consisting in merging the unitary clouds (Nk), so as to obtain said optimised 3D cloud (Nopt), the merging step (E5) comprising:

  • a sub-step (E5A) consisting, for each unitary cloud, in carrying out the following operations:
  • centring the global components of the unitary cloud;
• implementing a principal component analysis to estimate the longitudinal axis of the unitary cloud; and
• generating a rotation of the unitary cloud to orient it along a predefined axis; and
• a sub-step (E5B) consisting in computing the statistical average, point by point, of the global components (X, Y, Z) and of the level component (L) of the assembly of the unitary clouds to obtain said optimised 3D cloud.

2. The method according to claim 1,
**characterised in that** the thresholding step (E1) comprises:

  - a sub-step (E1A) consisting in comparing the level of the intensity of each pixel to at least one minimum intensity threshold; and
  - a sub-step (E1B) consisting in retaining only the pixels whose intensity is greater than this minimum intensity threshold in the segmentation mask which is a binary map of the same size as the sum path image in which the retained pixels are at 1 and the non-retained pixels are at 0.

3. The method according to claim 2,
**characterised in that**, in the thresholding step (E1), a sub-step (E1C) is also carried out, consisting in carrying out a morphological filtering.

4. The method according to any one of the preceding claims,
**characterised in that** the alignment step (E3) comprises the following sequence of successive sub-steps (E3A, E3B), which are implemented for each segmentation mask:

  - a sub-step (E3A) consisting in making a correlation of the profile or profiles to estimate potential translations and optimal sampling; and
  - a sub-step (E3B) consisting in making a completion with empty cells and zero energy components of previous profiles or of the next profile.

5. The method according to any one of the preceding claims,
**characterised in that** the computing of the level component (L) takes into account, in addition to the value of the energy profile at the cell, the quadratic sum of the standard deviations computed on the 3D relocated pixels contained in the cell.

6. The method according to any one of the preceding claims,
**characterised in that** the merging step (E5) comprises a sub-step (E5C) of filtering outliers.

7. A device for generating an optimized 3D point cloud illustrating an elongate object (3), in particular a ship (33), from a sequence of images of the environment of the elongate object (3) generated by a synthetic aperture radar (2) provided with a plurality of paths, each of the images referred to as multipath generated by the synthetic aperture radar (2) comprising a synthetic aperture image per path, the multipath images being subjected to an interferometric processing allowing to obtain, for each multipath image, a sum path image and angular maps in azimuth and in elevation,

**characterised in that** it comprises at least:

- a thresholding unit (6) configured to carry out an adaptive thresholding so as to generate a segmentation mask for each of the images referred to as multipath, each of the multipath images comprising a sum path image and angular maps in azimuth and in elevation;
- a processing unit (7) configured to carry out, for each of said segmentation masks, an accumulation of measurements so as to generate, for each of said segmentation masks, at least one accumulator (AC) and an energy profile (F1 to F4), the processing unit (7) being configured for each segmentation mask:

• to implement a principal component analysis to estimate a length axis of the elongate object (3), representing an axis referred to as principal (PA);
• to compute at least one accumulator (AC) sampled along the principal axis (AP), the accumulator (AC) representing a one-dimensional grid comprising a plurality of cells (C1 to C5), each of said cells (C1 to C5) containing the pixels of the segmentation mask that are located at the level of the cell; and
• to compute at least one energy profile (F1 to F4) from the accumulator (AC), the energy profile (F1 to F4) representing a one-dimensional vector whose values depend on the intensities of the pixels of each of the cells of the accumulator;

- an alignment unit (8) configured to calibrate the accumulators (AC) and the energy profiles (F1 to F4) so as to obtain accumulators referred to as calibrated and energy profiles referred to as calibrated, as many accumulators and energy profiles as there are segmentation masks being provided, all the accumulators and the energy profiles provided having the same number of cells and all the cells of a given index corresponding to each other;
- a computing unit (9) configured to compute, for each of said segmentation masks, from the calibrated accumulators and the calibrated energy profiles, a unitary cloud (Nk) via a unitary merging, the computing unit (9) being configured to define, for each of the segmentation masks, a unitary cloud whose number of points is equal to the number of cells of the calibrated accumulator, and for each cell of the calibrated accumulator:

• to compute an assembly of components (Xi, Yi, Zi) referred to as individual of each of the pixels in the cell;
• to compute an assembly of components (X, Y, Z) referred to as global for each of the cells, from the assembly of the individual components (Xi, Yi, Zi) of the cell; and
• to compute a level component (L), based on at least the value of the energy profile at the cell; and

- a merging unit (10) configured to merge the unitary clouds (Nk), so as to obtain said optimised 3D cloud (Nopt); the merging unit (10) being configured:

• to carry out the following operations, for each unitary cloud:
• centring the global components of the unitary cloud;
• implementing a principal component analysis to estimate the longitudinal axis of the unitary cloud; and
• generating a rotation of the unitary cloud to orient it along a predefined axis; and
• to compute the statistical average, point by point, of the global components (X, Y, Z) and of the level component (L) of the assembly of the unitary clouds to obtain said optimised 3D cloud.

8. A system for recognising and identifying a target representing an elongate object, in particular a ship, said system (12) comprising at least:

- a synthetic aperture radar (2) provided with a plurality of paths and capable of generating images of the environment of the elongate target (3);
- a processing unit (31) configured to process the images generated by the synthetic aperture radar (2) so as to derive data referred to as detection;
- a database (13) containing data referred to as target reference; and
- a comparison unit (16) configured to compare the detection data with the reference data in the database (13) so as to be able to recognise and identify an elongate target (3),

**characterised in that** the processing unit (31) comprises a device (1) as specified in claim 7 and a unit carrying out an interferometric processing.

9. The system according to claim 8, **characterised in that** it comprises a decision unit (20) using the identification data of an elongate target transmitted by the comparison unit (16) and additional data to make a goal designation decision.

10. A system for generating a trained metric and a reference base related to at least one type of elongate object, in particular a ship, said system (23) comprising at least:

   - a base of object models (24), and at least of elongate objects;
   - a multipath synthetic aperture radar scene generator (25) linked to the object model base (24) and capable of simulating multipath SAR images (1);
   - a processing unit (30) configured to process the images generated by the scene generator (25) to create a point cloud depicting an elongate object and provide data;
   - a creation unit (26) for creating a reference base, linked to the object model base (24) and adapted to create a reference base (27); and
   - a learning unit (28) configured to carry out a learning from the data received from the processing unit (30) and from the reference base (27) and to provide the trained metric and the reference base,

   **characterised in that** the processing unit (30) comprises a device (1) according to claim 7 and a unit carrying out an interferometric processing beforehand.

Fig. 1

EP 4 012 445 B1

EP 4 012 445 B1

Fig. 2

Fig. 3A

Fig. 3B

Fig. 3C

FD

D

## Fig. 4A

P

Pi

AC1

## Fig. 4B

Pi

P

AC2

## Fig. 4C

P

Pi

AC3

| E1 | | E2 | | E3 | | E4 | | E5 |
|----|---|----|---|----|---|----|---|----|

E1A  E1B  E1C → E2A  E2B  E2C → E3A  E3B → E4A  E4B  E4C → E5A  E5B  E5C

Fig. 5

EP 4 012 445 B1

Fig. 6A

Fig. 6B

Fig. 7A

Fig. 7B

Fig. 8A

Fig. 8B

Fig. 8C

Fig. 8D

Fig. 9A

Fig. 9B

Fig. 9C

Fig. 9D

Fig. 9E

Fig. 9F

Fig. 10

Fig. 11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4546355 A

**Littérature non-brevet citée dans la description**

- **SALVETTI FEDERICA**. Multiview Three-Dimensional Interferometric Inverse Synthetic Aperture Rada. IEEE, 01 April 2019, 718-733
- **RAJ RAGHU G**. 3D ISAR Imaging Algorithm Based on Amplitude Monopulse Processing at W Band. IEEE, 15 October 2019, 1-6
- **CAI JINJIAN**. D ISAR Imaging : The Aligment Problem. IEEE, 23 September 2019, 1-5
- **GUIJIE DIAO**. Three-dimensional monopulse radar imaging simulation of ships on sea surfaces. *Proceedings of spie*, 21 November 2012, 85360V-1